(19) **Europäisches Patentamt**
**European Patent Office**
**Office européen des brevets**

(11) **EP 4 571 588 A1**

(12) **EUROPEAN PATENT APPLICATION**

(43) Date of publication:
**18.06.2025 Bulletin 2025/25**

(21) Application number: **24219610.3**

(22) Date of filing: **12.12.2024**

(51) International Patent Classification (IPC):
**G06N 3/08** $^{(2023.01)}$    **B60W 60/00** $^{(2020.01)}$

(52) Cooperative Patent Classification (CPC):
**B60W 60/0011; B60W 60/0027; G06N 3/044;
G06N 3/045; G06N 3/08;** B60W 2050/0028;
B60W 2556/10

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.12.2023 US 202318540354**

(71) Applicant: **WAYMO LLC
Mountain View, CA 94043 (US)**

(72) Inventors:
• **YAN, Qiaojing
Mountain View, 94043 (US)**
• **TIAN, Ran
Mountain View, 94043 (US)**
• **GUAN, Yun Jia
Mountain View, 94043 (US)**
• **MNEIMNEH, Maher
Mountain View, 94043 (US)**

(74) Representative: **Anderson, Oliver Ben et al
Venner Shipley LLP
200 Aldersgate
London EC1A 4HD (GB)**

(54) **DISTILLATION-TRAINED MACHINE LEARNING MODELS FOR EFFICIENT TRAJECTORY PREDICTION**

(57)    The described aspects and implementations enable training and deploying of accurate one-shot models capable of predicting trajectories of vehicles and other objects in driving environments. The disclosed techniques include, in one implementation, obtaining training data that includes a training input representative of a driving environment of a vehicle and one or more ground truth trajectories associated with a forecasted motion of the vehicle within the driving environment. The one or more ground truth trajectories are generated by a teacher model using the training input. The techniques further include training, using the training data, a student model to predict one or more trajectories of the vehicle and/or objects in the driving environment of the vehicle.

FIG. 4

## Description

### TECHNICAL FIELD

The instant specification generally relates to autonomous vehicles. More specifically, the instant specification relates to fast and accurate prediction of behavior of objects in driving environments.

### BACKGROUND

An autonomous (fully or partially self-driving) vehicle (AV) operates by sensing an outside environment with various electromagnetic (e.g., radar and optical) and non-electromagnetic (e.g., audio and humidity) sensors. Some autonomous vehicles chart a driving path through the environment based on the sensed data. The driving path can be determined based on Global Positioning System (GPS) data and road map data. While the GPS and the road map data can provide information about static aspects of the environment (buildings, street layouts, road closures, etc.), dynamic information (such as information about other vehicles, pedestrians, street lights, etc.) is obtained from contemporaneously collected sensing data. Precision and safety of the driving path and of the speed regime selected by the autonomous vehicle depend on timely and accurate identification of various objects present in the outside environment and on the ability of a driving algorithm to process the information about the environment and to provide correct instructions to the vehicle controls and the drivetrain.

### BRIEF DESCRIPTION OF THE DRAWINGS

The present disclosure is illustrated by way of examples, and not by way of limitation, and can be more fully understood with references to the following detailed description when considered in connection with the figures, in which:

FIG. 1 is a diagram illustrating components of an example autonomous vehicle (AV) capable of deploying a distillation-trained one-shot model for behavior prediction in driving environments, in accordance with some implementations of the present disclosure.
FIG. 2 is a diagram illustrating an example architecture that can be used for training and deployment of a distillation-trained one-shot model for behavior prediction in driving environments, in accordance with some implementations of the present disclosure.
FIG. 3 is a schematic diagram illustrating an example workflow for training of an autoregressive model for prediction of object trajectories in driving environments, in accordance with some implementations of the present disclosure.
FIG. 4 is a schematic diagram illustrating an example workflow of deployment of the autoregressive model for generation of distillation training data, in accordance with some implementations of the present disclosure.
FIG. 5 is a schematic diagram illustrating operations of a one-shot trajectory prediction model that is trained using distillation techniques, in accordance with some implementations of the present disclosure.
FIG. 6 illustrates an example method of training and deploying one-shot models capable of predicting trajectories of vehicles and other objects in driving environments, in accordance with some implementations of the present disclosure.
FIG. 7 depicts a block diagram of an example computer device capable of object tracking in vehicle environments using pipelined processing by multiple machine learning models, in accordance with some implementations of the present disclosure.

### SUMMARY

In one implementation, disclosed is a method that involves obtaining first training data including a first training input representative of a driving environment of a vehicle, the driving environment comprising one or more objects, and one or more ground truth trajectories associated with a forecasted motion of the vehicle within the driving environment, wherein the one or more ground truth trajectories are generated by a teacher model using the first training input. The method further includes training, using the training data, a student model to predict one or more trajectories. Training the student model includes reducing a difference between the one or more trajectories predicted by the student model and the one or more ground truth trajectories.

In another implementation, disclosed is a system that includes a sensing system of a vehicle and a data processing system of the vehicle. The sensing system is configured to acquire sensing data for a driving environment of the vehicle. The data processing system is configured to generate, using the acquired sensing data, an inference data characterizing one or more objects in the environment of the vehicle. The data processing system is configured to apply a first model to the inference data to predict one or more trajectories of the vehicle in the environment. The first model is trained using a second model, which is (or includes) an autoregressive model. The data processing system is further configured to cause a driving path of the vehicle to be modified in view of the one or more predicted trajectories.

In yet another implementation, disclosed is a non-transitory computer-readable memory storing instructions that, when executed by a processing device, cause the processing device to obtain an inference data characterizing one or more objects in an environment of a vehicle and apply a first model to the inference data to predict one or more trajectories of the vehicle in the environment. The first model is trained using a second model, which is (or includes) an autoregressive model. The processing device is further to cause a driving path of the vehicle to be modified in view of the one or more predicted trajectories.

## DETAILED DESCRIPTION

An autonomous vehicle or a vehicle deploying various driver assistance features can use multiple sensor modalities to facilitate detection of objects in the outside environment and predict future trajectories of such objects. Sensors can include radio detection and ranging (radar) sensors, light detection and ranging (lidar) sensors, one or more digital cameras, sonars, positional sensors, and the like. Different types of sensors can provide different and complementary benefits. For example, radars and lidars emit electromagnetic signals (radio signals or optical signals) that reflect from the objects and carry back information about distances to the objects (e.g., determined from time of flight of the signals) and velocities of the objects (e.g., from the Doppler shift of the frequencies of the reflected signals). Radars and lidars can scan an entire 360-degree view by using a series of consecutive sensing frames. Sensing frames can include numerous reflections covering the outside environment in a dense grid of return points. Each return point can be associated with the distance to the corresponding reflecting object and a radial velocity (a component of the velocity along the line of sight) of the reflecting obj ect.

Lidars, by virtue of their sub-micron optical wavelengths, have high spatial resolution, which allows obtaining many closely-spaced return points from the same object. This enables accurate detection and tracking of objects once the objects are within the reach of lidar sensors. Radar sensors are inexpensive, require less maintenance than lidar sensors, have a large working range of distances, and have a good tolerance of adverse weather conditions. Cameras (e.g., photographic or video cameras) capture two-dimensional projections of the three-dimensional outside space onto an image plane (or some other non-planar imaging surface) and can acquire high resolution images at both shorter distances and longer distances.

Various sensors of a vehicle's sensing system (e.g., lidars, radars, cameras, and/or other sensors, such as sonars) capture depictions of objects in the environment of the vehicle. The vehicle's perception system identifies objects based on objects' appearance, state of motion, trajectory of the objects, and/or other properties. For example, lidars can accurately map a shape of one or more objects (using multiple return points) and can further determine distances to those objects and/or the objects' velocities. Cameras can obtain visual images of the objects. The perception system can map shapes and locations (obtained from lidar data) of various objects in the environment to their visual depictions (obtained from camera data) and perform a number of computer vision operations, such as segmenting (clustering) sensing data among individual objects (clusters), identifying types/makes/models of the individual objects, and/or the like. A prediction and planning system can track motion (including but not limited to locations $X$ and velocities $V$) of various objects across multiple times, $(X_1, V_1), (X_2, V_2), \ldots (X_j, V_j),$ , and extrapolate (forecast) the previously observed motion to a likely future motion $(X_{j+1}, V_{j+1}),$ , $(X_{j+2}, V_{j+2}), (X_{j+3}, V_{j+3})$, etc. The predicted motion can then be used by various vehicle control systems to select a driving path that takes these objects into account, e.g., avoids the objects, slows the vehicle down in the presence of the objects, and/or takes some other suitable action. In more advanced instances, the prediction system can include one or more machine learning models (MLMs) that anticipate interactions of multiple objects of the environment. For example, when several vehicles are approaching an intersection and one or more pedestrians are standing by the side of the road or stepping from the sidewalk onto the roadway, the prediction models can forecast (e.g., based on the locations and velocities of the vehicles, state of traffic lights at the intersection, and so on) what the pedestrians are likely to do within a given time horizon (e.g., the next several seconds) and can further forecast how the vehicles would change their trajectories in response to the pedestrians' motion. Training such prediction model(s) typically involves collecting a large number of real-world driving situations, using prediction model(s) to forecast behavior of objects in these training driving situations, and then using the known actual behavior of the objects as the ground truth for the model's predictions.

For example, the behavior of an autonomous vehicle (AV) can be modeled after what an expert human driver does in similar situations, e.g., passing, stopping, slowing down, changing lanes, yielding, maintaining a specific minimum distance, and/or the like. The modeled AV behavior can be further contingent on how various other road users are to respond to the AV's driving path. For example, upon approaching an intersection and encountering an obstacle, e.g., a stalled car in the current lane of its motion, the AV may have a choice of moving to an unobstructed lane or braking while staying in the current lane. In response to the AV breaking in the current lane, an oncoming truck entering the intersection may begin a left turn (thus, foreclosing a possibility for the AV to go around the obstacle and enter the intersection until the oncoming truck has completed the turn). In response to the AV changing lanes, however, the oncoming truck is likely to yield to the AV. A trained MLM can predict such multiple interdependent AV trajectories (driving paths) using a number of different techniques. Autoregressive MLMs can predict trajectories one step at a time for a sequence of times, $t_1, t_2, t_3, \ldots t_M$, e.g., with probabilities of the AV (and/or other objects') trajectories at time $t_j$ being contingent on probabilities of states of AV/objects at an earlier time $t_{j-1}$ (and times $t_{j-2}, t_{j-3}$, etc.). More specifically, an autoregressive MLM can process an initial state $S_0$ (at time $t_0$) $N$ times,

$$S_0(t_0) \rightarrow MLM \rightarrow \{S_0(t_0), S_1(t_1)\} \rightarrow MLM \rightarrow \cdots \rightarrow MLM \rightarrow \{S_0(t_0), S_1(t_1), \ldots S_N(t_N)\}.$$

One-shot MLMs, on the other hand, attempt to perform the trajectory prediction by deploying the MLM once,

$$S_0(t_0) \rightarrow MLM \rightarrow \{S_1(t_1) \ldots S_N(t_N)\}.$$

Input data into the MLMs typically includes multiple modalities, e.g., locations and velocities of multiple objects in the environment (including current and previous-historical-locations/velocities of such objects), roadgraph data (e.g., map data, lane boundaries, road signs, etc.), status of traffic lights, and/or the like. Autoregressive MLMs have an accuracy advantage over one-shot MLMs in that the autoregressive MLMs are better capable of modeling various interdependencies of objects' behavior, due to multiple computational passes performed as part of the autoregressive MLM processing. Autoregressive MLMs, however, are challenging to deploy onboard autonomous and other vehicles. In particular, autoregressive MLMs require larger memory and processing resources than one-shot MLMs. Furthermore, multiple processing passes of autoregressive MLMs significantly increase computational latency. Since autonomous driving safety and efficiency is affected negatively by increases in latency, one-shot trajectory prediction MLMs remain the preferred choice for autonomous vehicle systems.

Aspects and implementations of the present disclosure address these and other challenges of the existing behavior prediction technology by enabling methods and systems that improve accuracy and decrease latency of trajectory determination by one-shot models. In one example implementation, an autoregressive MLM is first trained using input data collected in real driving situations. The autoregressive MLM can be trained to predict a substantial number of probable trajectories (e.g., more than a hundred trajectories). During training of the autoregressive MLM, the MLM learns to predict trajectories that occur in real driving situations. The trained autoregressive MLM can then be used as a teacher model in distillation training of a one-shot MLM. For example, the trajectories output by the autoregressive MLM can be used as a ground truth for the one-shot MLM training. In some implementations, the trajectories output by the autoregressive MLM can be aggregated into a fewer number (e.g., 10-20) of most distinct trajectories and the one-shot MLM can learn to predict these aggregated trajectories. Another possible implementation is to let the one-shot MLM prediction match the autoregressive MLM output distribution. As a result of such distillation training, the one-shot MLM learns to replicate the representative outputs of the autoregressive MLM in one pass, with substantially reduced latency and memory/compute requirements.

The advantages of deploying distillation-trained one-shot models include, but are not limited to, efficient, accurate, and fast trajectory prediction for the autonomous vehicle and/ other objects encountered in driving environments. In turn, improved accuracy of behavior prediction, enabled by latency reduction, leads to enhanced safety and reduced risk of accidents associated with driving operations.

In those instances, where description of the implementations refers to autonomous vehicles, it should be understood that similar techniques can be used in various driver-assist systems that do not rise to the level of fully autonomous driving systems. More specifically, disclosed techniques can be used in Level 2 driver assistance systems that implement steering, braking, acceleration, lane centering, adaptive cruise control, etc., as well as other driver support. Likewise, the disclosed techniques can be used in Level 3 driving assistance systems capable of autonomous driving under limited (e.g., highway) conditions. In such systems, fast and accurate detection and tracking of objects can be used to inform the driver of the approaching vehicles and/or other objects, with the driver making the ultimate driving decisions (e.g., in Level 2 systems), or to make certain driving decisions (e.g., in Level 3 systems), such as reducing speed, changing lanes, etc., without requesting driver's feedback.

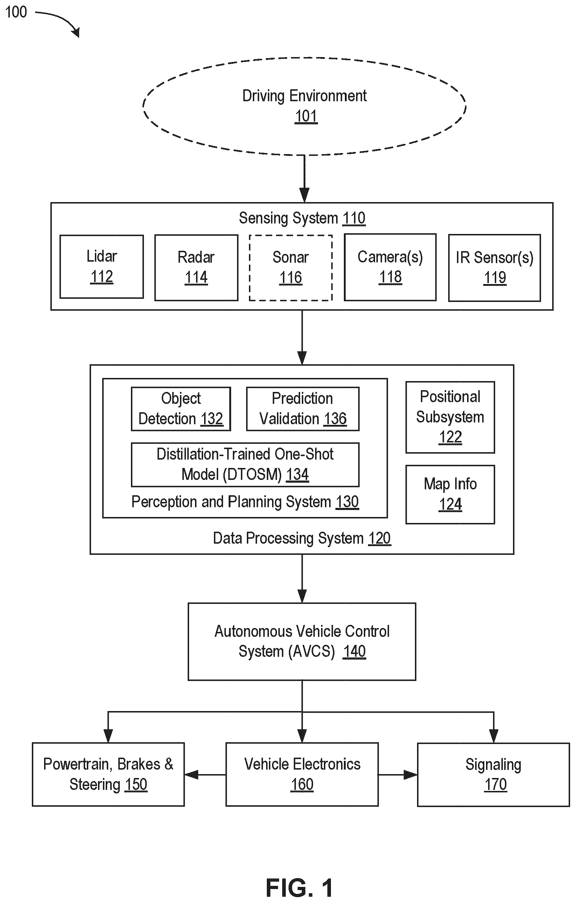

**FIG. 1** is a diagram illustrating components of an example autonomous vehicle (AV) 100 capable of deploying a distillation-trained one-shot model for behavior prediction in driving environments, in accordance with some implementations of the present disclosure. Autonomous vehicles can include motor vehicles (cars, trucks, buses, motorcycles, all-terrain vehicles, recreational vehicles, any specialized farming or construction vehicles, and the like), aircraft (planes, helicopters, drones, and the like), naval vehicles (ships, boats, yachts, submarines, and the like), or any other self-propelled vehicles (e.g., robots, factory or warehouse robotic vehicles, sidewalk delivery robotic vehicles, etc.) capable of being operated in a self-driving mode (without a human input or with a reduced human input).

A driving environment 101 can include any objects (animate or inanimate) located outside the AV, such as roadways, buildings, trees, bushes, sidewalks, bridges, mountains, other vehicles, pedestrians, and so on. The driving environment 101 can be urban, suburban, rural, and so on. In some implementations, the driving environment 101 can be an off-road environment (e.g., farming or other agricultural land). In some implementations, the driving environment can be an indoor environment, e.g., the environment of an industrial plant, a shipping warehouse, a hazardous area of a building, and so on. In some implementations, the driving environment 101 can be substantially flat, with various objects moving parallel to a surface (e.g., parallel to the ground). In other implementations, the driving environment can be three-dimensional and can include objects that are capable of moving along all three directions (e.g., balloons, leaves, etc.). Hereinafter, the term "driving environment" should be understood to include all environments in which an autonomous motion of self-propelled vehicles can occur. For example, "driving environment" can include any possible flying environment of an aircraft or a marine environment of a naval vessel. The objects of the driving environment 101 can be located at any distance from the AV, from close distances of several feet (or less) to several miles (or more).

As described herein, in a semi-autonomous or partially autonomous driving mode, even though the vehicle assists with one or more driving operations (e.g., steering, braking and/or accelerating to perform lane centering, adaptive cruise control, advanced driver assistance systems (ADAS), or emergency braking), the human driver is expected to be situationally aware of the vehicle's surroundings and supervise the assisted driving operations. Here, even though the vehicle may perform all driving tasks in certain situations, the human driver is expected to be responsible for taking control as needed.

Although, for brevity and conciseness, various systems and methods may be described below in conjunction with autonomous vehicles, similar techniques can be used in various driver assistance systems that do not rise to the level of fully autonomous driving systems. In the United States, the Society of Automotive Engineers (SAE) have defined different levels of automated driving operations to indicate how much, or how little, a vehicle controls the driving, although different organizations, in the United States or in other countries, may categorize the levels differently. More specifically, disclosed systems and methods can be used in SAE Level 2 (L2) driver assistance systems that implement steering, braking, acceleration, lane centering, adaptive cruise control, etc., as well as other driver support. The disclosed systems and methods can be used in SAE Level 3 (L3) driving assistance systems capable of autonomous driving under limited (e.g., highway) conditions. Likewise, the disclosed systems and methods can be used in vehicles that use SAE Level 4 (L4) self-driving systems that operate autonomously under most regular driving situations and require only occasional attention of the human operator. In all such driving assistance systems, accurate lane estimation can be performed automatically without a driver input or control (e.g., while the vehicle is in motion) and result in improved reliability of vehicle positioning and navigation and the overall safety of autonomous, semi-autonomous, and other driver assistance systems. As previously noted, in addition to the way in which SAE categorizes levels of automated driving operations, other organizations, in the United States or in other countries, may categorize levels of automated driving operations differently. Without limitation, the disclosed systems and methods herein can be used in driving assistance systems defined by these other organizations' levels of automated driving operations.

The example AV 100 can include a sensing system 110. The sensing system 110 can include various electromagnetic (e.g., optical) and non-electromagnetic (e.g., acoustic) sensing subsystems and/or devices. The sensing system 110 can include a radar 114 (or multiple radars 114), which can be any system that utilizes radio or microwave frequency signals to sense objects within the driving environment 101 of the AV 100. The radar(s) 114 can be configured to sense both the spatial locations of the objects (including their spatial dimensions) and velocities of the objects (e.g., using the Doppler shift technology). Hereinafter, "velocity" refers to both how fast the object is moving (the speed of the object) as well as the direction of the object's motion. The sensing system 110 can include a lidar 112, which can be a laser-based unit capable of determining distances to the objects and velocities of the objects in the driving environment 101. Each of the lidar 112 and radar 114 can include a coherent sensor, such as a frequency-modulated continuous-wave (FMCW) lidar or radar sensor. For example, radar 114 can use heterodyne detection for velocity determination. In some implementations, the functionality of a ToF and coherent radar is combined into a radar unit capable of simultaneously determining both the distance to and the radial velocity of the reflecting object. Such a unit can be configured to operate in an incoherent sensing mode (ToF mode) and/or a coherent sensing mode (e.g., a mode that uses heterodyne detection) or both modes at the same time. In some implementations, multiple lidars 112 or radars 114 can be mounted on AV 100.

Lidar 112 can include one or more light sources producing and emitting signals and one or more detectors of the signals reflected back from the objects. In some implementations, lidar 112 can perform a 360-degree scanning in a horizontal direction. In some implementations, lidar 112 can be capable of spatial scanning along both the horizontal and vertical directions. In some implementations, the field of view can be up to 90 degrees in the vertical direction (e.g., with at least a part of the region above the horizon being scanned with radar signals). In some implementations, the field of view can be a full sphere (consisting of two hemispheres).

The sensing system 110 can further include one or more cameras 118 to capture images of the driving environment 101. The images can be two-dimensional projections of the driving environment 101 (or parts of the driving environment 101) onto a projecting surface (flat or non-flat) of the camera(s). Some of the cameras 118 of the sensing system 110 can be video cameras configured to capture a continuous (or quasi-continuous) stream of images of the driving environment 101. The sensing system 110 can also include one or more infrared (IR) sensors 119. The sensing system 110 can further include one or more sonars 116, which can be ultrasonic sonars, in some implementations.

The sensing data obtained by the sensing system 110 can be processed by a data processing system 120 of AV 100. For example, the data processing system 120 can include a perception and planning system 130. The perception and planning system 130 can be configured to detect and track objects in the driving environment 101 and to recognize the detected objects. For example, perception and planning system 130 can analyze images captured by the cameras 118 and can be capable of detecting traffic light signals, road signs, roadway layouts (e.g., boundaries of traffic lanes, topologies of intersections, designations of parking places, and so on), presence of obstacles, and the like. Perception and planning system 130 can further receive radar sensing data (Doppler data and ToF data) and determine distances to various objects in the environment 101 and velocities (radial and, in some implementations, transverse, as described below) of such objects. In some implementations, perception and planning system 130 can use radar data in combination with the data captured by the camera(s) 118, as described in more detail below.

Perception and planning system 130 can include an object detection module 132 to perform segmentation of sensing data into individual objects and identification of types of the objects. Object detection module 132 can include one or more trainable MLMs that can process data of one or more sensing modalities, e.g., lidar data, radar data, camera data (including infrared camera data), sonar data, and/or the like. Perception and planning system 130 monitors how the driving environment 101 evolves with time, e.g., by keeping track of the locations and velocities of the animate objects (e.g., relative to Earth and/or the AV) and predicting how various objects are to move in the future, over a certain time horizon, e.g., 1-10 seconds or more. In particular, perception and planning system 130 can further include a distillation-trained one-shot model (DTOSM) 134 that predicts trajectories of AV 100 and, in some implementations, other objects in driving environment 101 for a predetermined (e.g., as part of DTOSM 134 architecture) time horizon, which can include a number of future times, $t_1, t_2, ... t_M$, spaced according to any suitable schedule, e.g., 0.5 sec, 1 sec, 2 sec, 3 sec, and/or the like. For example, DTOSM 134 can predict how likely AV 100 is to pass another vehicle after the next 1 sec, 2 sec, etc., to reach an intersection after 3 sec, 5 sec, etc., to pass the intersection after 5 sec, 6 sec, etc., to stop at or after the intersection to let pedestrians cross the road, and so on. The predictions can be based on the current locations and velocities of the tracked objects as well as on the earlier locations and velocities (and, in some cases, accelerations) of the tracked objects. In some implementations, DTOSM 134 can predict trajectories on a rolling basis, e.g., following passage of time $\tau$ after generating a set of predictions for times $t_1, t_2, ... t_M$, DTOSM 134 can generate a new set of predictions for times $t_1 + \tau, t_2 + \tau, ... t_M + \tau$, which can be partially overlapping with the previous set of times. Accordingly, DTOSM 134 can continually update the predicted trajectories based on new data collected by sensing system 110, object detection module 132, and/or the other systems and components of data processing system 120. In some implementations, object detection module 132 can be integrated with DTOSM 134 into a single component. In some implementations, DTOSM 134 can be a hybrid prediction model that predicts trajectories of some objects with an autoregressive model while predicting trajectories of other objects and/or the AV with a one-shot model (or vice versa).

Perception and planning system 130 can include a prediction validation component 136 that monitors and verifies predictions of DTOSM using subsequent sensing data. For example, prediction validation component 136 can verify whether the predicted trajectories of various objects and the predicted (and selected) trajectory of the AV have been accurate. More specifically, prediction validation component 136 can track actual locations and velocities (and/or other metrics, e.g., distances between vehicles, frequency of AV stoppages, etc.) of the AV and other objects and compute differences between actual and predicted locations/velocities. Prediction validation component 136 may collect statistics differences, including but not limited to a number of instances the distances between vehicles dropped below predetermined safety buffers, and/or the like. The information/statistics collected by prediction validation component 136 can be used for onboard adjustments of how perception and planning system 130 uses prediction of DTOSM 134. For example, if the actual distances consistently fall below safety margins, perception and planning system 130 can select, for implementation, predicted AV trajectories with higher safety margins. Furthermore, the information/statistics collected by prediction validation component 136 can be used for offline retraining of DTOSM 134.

Perception and planning system 130 can also receive information from a positioning subsystem 122, which can include a GPS transceiver and/or inertial measurement unit (IMU) (not shown in **FIG. 1**), configured to obtain information about the position of the AV relative to Earth and its surroundings. Positioning subsystem 122 can use the positioning data, e.g., GPS and IMU data) in conjunction with the sensing data to help accurately determine the location of the AV with respect to fixed objects of the driving environment 101 (e.g., roadways, lane boundaries, intersections, sidewalks, crosswalks, road signs, curbs, surrounding buildings, etc.) whose locations can be provided by map information 124. In some implementations, data processing system 120 can receive non-electromagnetic data, such as audio data (e.g., ultrasonic sensor data, or data from one or more microphones detecting emergency vehicle sirens), temperature sensor data, humidity sensor data, pressure sensor data, meteorological data (e.g., wind speed and direction, precipitation data), and the like.

The data generated by perception and planning system 130, positional subsystem 122, and/or the other systems and components of data processing system 120 can be used by an autonomous driving system, such as AV control system (AVCS) 140. The AVCS 140 can include one or more algorithms that control how AV is to behave in various driving situations and environments. For example, the AVCS 140 can include a navigation system for determining a global driving route to a destination point. The AVCS 140 can also include a driving path selection system for selecting a particular path through the immediate driving environment, which can include selecting a traffic lane, negotiating a traffic congestion, choosing a place to make a U-turn, selecting a trajectory for a parking maneuver, and so on. The AVCS 140 can also include an obstacle avoidance system for safe avoidance of various obstructions (rocks, stalled vehicles, a jaywalking pedestrian, and so on) within the driving environment of the AV. The obstacle avoidance system can be configured to evaluate the size of the obstacles and the trajectories of the obstacles (if obstacles are animated) and select an optimal driving strategy (e.g., braking, steering, accelerating, etc.) for avoiding the obstacles.

Algorithms and modules of AVCS 140 can generate instructions for various systems and components of the vehicle, such as the powertrain, brakes, and steering 150, vehicle electronics 160, signaling 170, and other systems and components not explicitly shown in **FIG. 1.** The powertrain, brakes, and steering 150 can include an engine (internal combustion engine, electric engine, and so on), transmission, differentials, axles, wheels, steering mechanism, and other systems. The vehicle electronics 160 can include an on-board computer, engine management, ignition, communication systems, carputers, telematics, in-car entertainment systems, and other systems and components. The signaling 170 can include high and low headlights, stopping lights, turning and backing lights, horns and alarms, inside lighting system, dashboard notification system, passenger notification system, radio and wireless network transmission systems, and so on. Some of the instructions output by the AVCS 140 can be delivered directly to the powertrain, brakes, and steering 150 (or signaling 170) whereas other instructions output by the AVCS 140 are first delivered to the vehicle electronics 160, which generates commands to the powertrain, brakes, and steering 150 and/or signaling 170.

In one example, the AVCS 140 can determine that an obstacle identified by the data processing system 120 is to be avoided by decelerating the vehicle until a safe speed is reached, followed by steering the vehicle around the obstacle. The AVCS 140 can output instructions to the powertrain, brakes, and steering 150 (directly or via the vehicle electronics 160) to: (1) reduce, by modifying the throttle settings, a flow of fuel to the engine to decrease the engine rpm; (2) downshift, via an automatic transmission, the drivetrain into a lower gear; (3) engage a brake unit to reduce (while acting in concert with the engine and the transmission) the vehicle's speed until a safe speed is reached; and (4) perform, using a power steering mechanism, a steering maneuver until the obstacle is safely bypassed. Subsequently, the AVCS 140 can output instructions to the powertrain, brakes, and steering 150 to resume the previous speed settings of the vehicle.

The "autonomous vehicle" can include motor vehicles (cars, trucks, buses, motorcycles, all-terrain vehicles, recreational vehicle, any specialized farming or construction vehicles, and the like), aircrafts (planes, helicopters, drones, and the like), naval vehicles (ships, boats, yachts, submarines, and the like), robotic vehicles (e.g., factory, warehouse, sidewalk delivery robots, etc.) or any other self-propelled vehicles capable of being operated in a self-driving mode (without a human input or with a reduced human input). "Objects" can include any entity, item, device, body, or article (animate or inanimate) located outside the autonomous vehicle, such as roadways, buildings, trees, bushes, sidewalks, bridges, mountains, other vehicles, piers, banks, landing strips, animals, birds, or other things.

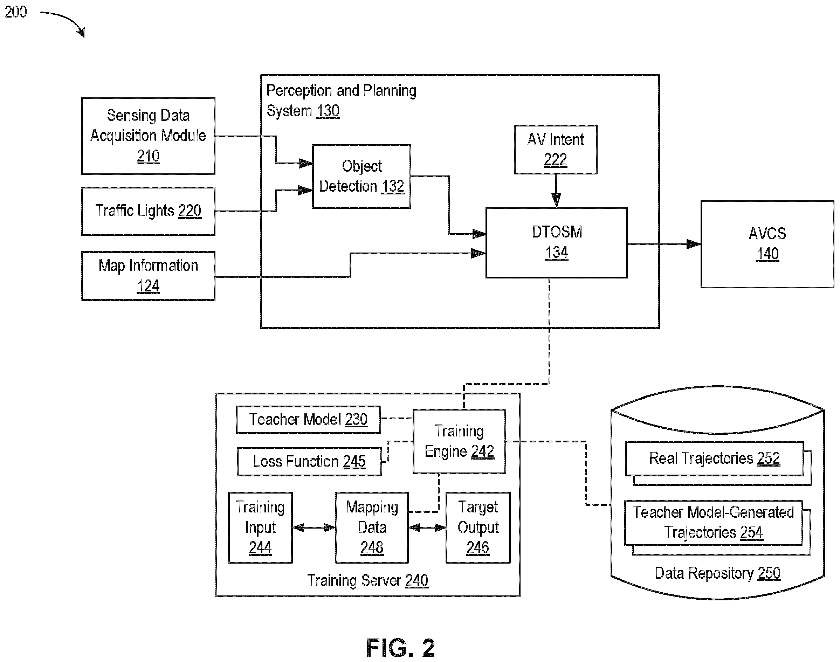

**FIG. 2** is a diagram illustrating an example architecture 200 that can be used for training and deployment of a distillation-trained one-shot model for behavior prediction in driving environments, in accordance with some implementations of the present disclosure. An input into perception and planning system 130 can include data obtained by sensing system 110 (e.g., by lidar 112, radar 114, camera(s) 118, and/or other sensors, with reference to **FIG. 1**). The obtained data can be provided via a sensing data acquisition module 210 that can decode, preprocess, format data to a format accessible to the perception and planning system 130. For example, sensing data acquisition module 210 can obtain a sequence of camera images, e.g., two-dimensional projections of the driving environment (or a portion thereof) on an array of sensing detectors (e.g., charged coupled device or CCD detectors, complementary metal-oxide-semiconductor or CMOS detectors, and/or the like). Each camera image can have pixels of various intensities of one color (for black-and-white images) or multiple colors (for color images). The camera images can be panoramic images or images depicting a specific portion of the driving environment. The camera images can include a number of pixels. The number of pixels can depend on the resolution of the image. Each pixel can be characterized by one or more intensity values. A black-and-white pixel can be characterized by one intensity value, e.g., representing the brightness of the pixel, with value 1 corresponding to a white pixel and value 0 corresponding to a black pixel (or vice versa). The intensity value can assume continuous (or discretized) values between 0 and 1 (or between any other chosen limits, e.g., 0 and 255). Similarly, a color pixel can be represented by more than one intensity value, such as three intensity values (e.g., if the RGB color encoding scheme is used) or four intensity values (e.g., if the CMYK color encoding scheme is used). Camera images can be preprocessed, e.g., downscaled (with multiple pixel intensity values combined into a single pixel value), upsampled, filtered, denoised, and the like. Camera image(s) can be in any suitable digital format (JPEG, TIFF, GIG, BMP, CGM, SVG, and so on).

Sensing data acquisition module 210 can further obtain lidar images, which can include a set of return points (point cloud) corresponding to laser beam reflections from various objects in the driving environment. Each return point can be understood as a data unit (pixel) that includes coordinates of reflecting surfaces, radial velocity data, intensity data, and/or the like. For example, sensing data acquisition module 210 can provide the lidar images that include the lidar intensity map $I(R, \theta, \phi)$, where $R, \theta, \phi$ is a set of spherical coordinates. In some implementations, Cartesian coordinates, elliptic coordinates, parabolic coordinates, or any other suitable coordinates can be used instead. The lidar intensity map identifies an intensity of the lidar reflections for various points in the field of view of the lidar. The coordinates of objects (or surfaces of the objects) that reflect lidar signals can be determined from directional data (e.g., polar $\theta$ and azimuthal $\phi$ angles in the direction of lidar transmissions) and distance data (e.g., radial distance $R$ determined from the time of flight of lidar signals). The lidar images can further include velocity data of various reflecting objects identified based on detected Doppler shift of the reflected signals. Sensing data acquisition module 210 can similarly obtain radar images.

The camera images, lidar images, and/or radar images can be large images of the entire driving environment or images of smaller portions of the driving environment (e.g., camera image acquired by a forward-facing camera(s) of the sensing system 110). The acquired images can be processed by an object detection module 132 that identifies individual objects in the driving environment, crops the images into portions (associated with those individual objects), and performs object identification. To identify individual objects, object detection module 132 can segment images collected by sensing system 110 into regions corresponding to such objects (e.g., using techniques of clustering, such as K-means clustering, and/or the like). Object detection module 132 can include any suitable computer vision model, e.g., a machine learning model trained to identify regions that include objects of interest, e.g., vehicles, pedestrians, animals, road signs, traffic lights, and so on.

In some implementations, historical behavior of objects identified by object detection module 132 can be tracked using a suitable statistical filter, e.g., Kalman filter. The Kalman filter computes a most probable geo-motion data in view of the measurements (images) obtained, predictions made according to a physical model of object's motion, and some statistical assumptions about measurement errors (e.g., covariance matrix of errors).

In some implementations, input into object detection 132 can include images of traffic lights 220. Object detection 132 can generate a digital representation (e.g., an embedding) indicating a status of traffic lights 220. Output of object detection module 132 can be used as an input into DTOSM 134. In some implementations, input into DTOSM 134 can also include a digital representation of a map information 124. Map information 124 can include a map of a drivable portion of the roadway, e.g., road boundaries, lane boundaries, roadway markings, signs, and or the like. In some implementations, map information 124 can also include a map of a certain vicinity of the roadway, e.g., a map of sidewalks where pedestrians and other vulnerable road users can be. Map information can be static, e.g., derived from pre-obtained maps, as well as dynamic, e.g., obtained using object detection module 132, which can capture more recent changes to the road layout, temporary lanes, closures, and/or the like.

Input into DTOSM 134 can further include an AV intent 222, which can be (or include) a digital representation of a driving plan of the AV over a prediction time horizon (or longer) consistent with a specific driving mission (which can include driving from a starting location to a destination location) For example, AV intent 222 can represent that the AV is to proceed straight through an intersection, make a right turn at the intersection, a U-turn, or specify any other driving maneuver to be performed. In some implementations, DTOSM 134 can be an MLM (or a set of multiple MLMs) capable of learning patterns of behavior various vehicles (e.g., when driven by a human expert driver) and various other objects encountered in driving environments as well as patterns of interaction of such objects with the vehicles and/or other objects. For example, DTOSM 134 can learn (and then be able to predict) that pedestrians walk on sidewalks and cross roadways responsive to permissive traffic light signals, but can, at times, walk on roadways and/or cross roadways even when traffic light signals are not permissive. DTOSM 134 can learn (and then be able to predict) patterns of acceleration, coasting, braking, steering, parking, and/or other driving patterns of cars, trucks, motorcycles, and/or the like, an order in which the vehicles cross intersections not equipped with traffic lights, patterns of motion of vehicles that are about to park at the side of a road or bypass a parked car, and many other patterns.

DTOSM 134 can deploy machine learning, including decision-tree algorithms, support vector machines, deep neural networks, and the like. Deep neural networks can include convolutional neural networks, recurrent neural networks (RNN) with one or more hidden layers, fully connected neural networks, long short-term memory neural networks, transformers, Boltzmann machines, and so on.

DTOSM 134 can be trained using digital representations-embeddings-of a driving history (e.g., preceding the instant moment by a certain set amount of time), traffic light signals, roadgraph info, AV intent, and/or other suitable information that can be relevant for predicting trajectories of the AV and objects present in various driving environments, e.g., urban driving environments, highway driving environments, rural driving environments, off-road driving environments, and/or the like. Training of DTOSM 134 and/or other MLMs can be performed by a training engine 242 hosted by a training server 240, which can be an outside server that deploys one or more processing devices, e.g., central processing units (CPUs), graphics processing units (GPUs), parallel processing units (PPUs), and/or the like. In some implementations, DTOSM 134 can be trained using ground truth trajectories output by a teacher model 230 (e.g., as disclosed in more detail below). In some implementations, prior to training DTOSM 134, training engine 242 can first train a teacher model 230, e.g., using trajectories of AVs and various real objects encountered during actual driving missions.

Training engine 242 can have access to a data repository 250 storing multiple real trajectories 252 encountered during actual driving missions (e.g., for training teacher model 230) and can also store multiple sets of trajectories 254 generated by the trained teacher model 230. Various trajectories 252 and 254 can be stored in conjunction with the corresponding contextual information, which can include history of motion of involved objects, roadgraph data, traffic light data, AV intent, and/or other contextual information. The contextual information can be stored in any suitable form, including a digital (embedding) representation, but can also be stored in a raw form, e.g., as images of the objects, traffic lights, roadgraph graphical (e.g., polyline) information, AV intent descriptors, and/or the like.

During training, training engine 242 can retrieve training data from data repository 250, prepare one or more training inputs 244 and one or more target outputs 246 (ground truth) and use the prepared inputs and outputs to train one or more models, including but not limited to DTOSM 134 and/or teacher model 230. Training data can also include mapping data 248 that maps training inputs 244 to the target outputs 246. During training of DTOSM 134, training engine 242 can cause DTOSM 134 to learn patterns in the training data captured by training input/target output pairs. To evaluate differences between training outputs and target outputs 246, training engine 242 can use various suitable loss functions such as mean squared error loss function (e.g., to evaluate departure from continuous ground truth values), binary cross-entropy loss function (e.g., to evaluate departures from binary classifications), and/or any other suitable loss function.

In some implementations, DTOSM 134 can be trained by training engine 242 and subsequently downloaded onto perception and planning system 130 of the AV. DTOSM 134, as illustrated in **FIG. 2,** can be trained using training data that includes training inputs 244 and corresponding target outputs 246 (correct matches for the respective training inputs).

During training of DTOSM 134 and/or teacher model 230, training engine 242 can change parameters (e.g., weights and biases) of the respective models until the models successfully learn how to predict correct trajectories of the AV and/or other objects (target outputs 246). In some implementations, more than one DTOSM 134 (and/or teacher model 230) can be trained for use under different conditions and for different driving environments, e.g., separate DTOSMs 134 can be trained for street driving and for highway driving. Different trained DTOSMs 134 (and/or teacher models 230) can have different architectures (e.g., different numbers of neuron layers and/or different topologies of neural connections), different settings (e.g., activation functions, etc.), and can be trained using different sets of hyperparameters.

The data repository 250 can be a persistent storage capable of storing lidar data, camera images, as well as data structures configured to facilitate accurate and fast identification and validation of sign detections, in accordance with various implementations of the present disclosure. Data repository 250 can be hosted by one or more storage devices, such as main memory, magnetic or optical storage disks, tapes, or hard drives, network-attached storage (NAS), storage area network (SAN), and so forth. Although depicted as separate from training server 240, in some implementations, the data repository 250 can be a part of training server 240. In some implementations, data repository 250 can be a network-attached file server, while in other implementations, data repository 250 can be some other type of persistent storage such as an object-oriented database, a relational database, and so forth, that can be hosted by a server machine or one or more different machines accessible to the training server 240 via a network (not shown in **FIG. 2**).

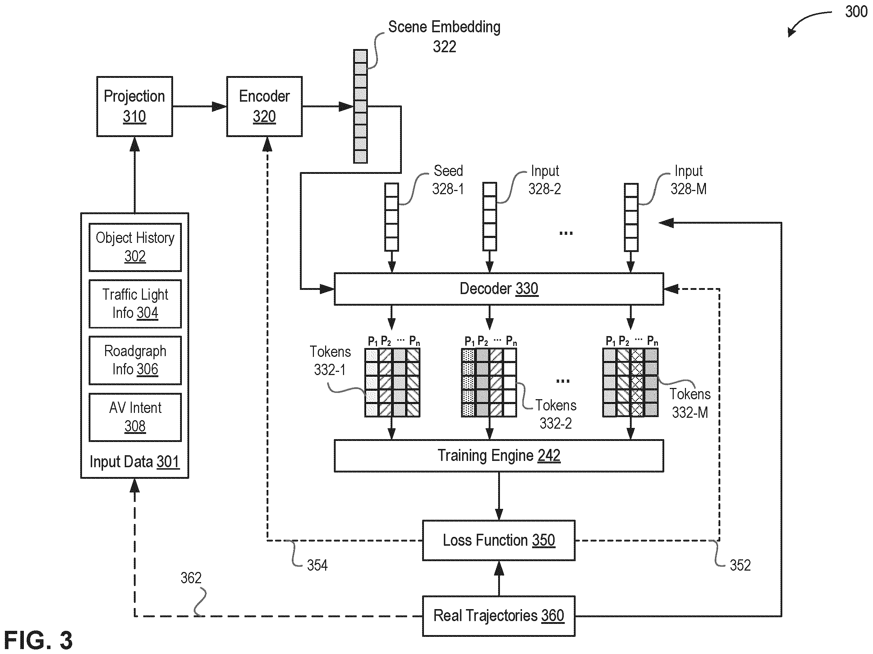

**FIG. 3** is a schematic diagram illustrating an example workflow 300 for training of an autoregressive model for prediction of object trajectories in driving environments, in accordance with some implementations of the present disclosure. Workflow 300 can include receiving input data 301. Input data 301 can include object history 302 for various identified objects in the driving environment. Object history 302 can include, for each identified object, a type of the object (e.g., car, light truck, heavy truck, bus, motorcyclist, pedestrian, etc.) and one or more locations $X_j$ of the object at corresponding times $t_j$ preceding a given ("current") moment of time. Each location can include multiple coordinates, e.g., distance to and angle towards the object or Cartesian coordinates defined relative to any suitable rectangular grid. Object history 302 can further include one or more velocities $V_j$ of the object at the times $t_j$. Each velocity can include multiple components, e.g., a radial velocity and an azimuthal velocity or two Cartesian velocity coordinates relative to a defined rectangular grid. Input data can include traffic light information 304, which can characterize a state of traffic lights directly visible to the vehicle that collected input data 301 (e.g., an autonomous vehicle) and can further include state(s) of traffic lights that are inferred from the visible traffic lights. For example, a vehicle approaching an intersection and observing a red light for the direction of the vehicle's travel and further observing traffic moving across the intersection can infer that the light is green for the cross-traffic. Input data 301 can include roadgraph information 306 for a certain portion of the driving environment. Input data 301 can further include an AV intent 308 (e.g., AV intent 222 of **FIG. 2**), which can include any type of indication of the vehicles intended driving path through the driving environment (or a portion of the driving environment), e.g., a representation of a polyline indicative of the intended driving path (lanes to be driven, turns to be taken, speed regime to be maintained, and/or the like).

Input data 301 can be generated for each temporal point of the vehicle's motion capturing the changing state of the driving environment as the vehicle drives through this environment. Input data 301 can be generated using multiple systems and components of the vehicle. For example, input data 301 can include data that is based on information collected by sensing system 110. Input data 301 can include lidar images (e.g., provided by lidar 112 in **FIG. 1**), radar images (e.g., provided by radar 114), camera images (e.g., provided by camera(s) 118), IR camera images (e.g., provided by IR sensors 119), and/or other suitable data. Input data 301 can further include data obtained from one or more additional systems, e.g., positional subsystem 122 (e.g., IMU data), map information 124, and/or the like. For example, roadgraph information 306 can be derived from stored map information 124, which can then be updated (e.g., with temporary and/or recent changes to the driving environment) using live data collected by the sensing system of the vehicle. The AV intent 308 can be generated by a planner system (such as perception and planning system 130 of **FIG. 1**), e.g., based on a route between a starting location and a destination location of the driving mission.

Various modalities of input data 301 can be represented with embeddings (feature vectors), which can have different dimensions, e.g., object history 302 can have a dimension $D_H \times 1$, traffic light information 304 can have a dimension $D_T \times 1$, roadgraph information 306 can have a dimension $D_R \times 1$, and AV intent 308 can have a dimension $D_I \times 1$. In some implementations, input data can be processed by a projection stage 310, which projects each of the differently-sized embeddings to embeddings of a common dimension, e.g., $D$. In one example implementation, projection stage 310 can include a weight matrix (and, possibly, a bias vector) of a suitably chosen dimension. For example, the weight matrix for the object history 302 projection can be a $D \times D_H$ matrix (and a bias vector can be a $D \times 1$ vector). In some implementations, the vectors (unprojected or projected to $D$ dimensions, depending on a specific implementation) can be aggregated (e.g., concatenated) and used as an input into an encoder 320 portion (e.g., subnetwork) of the autoregressive model.

Some of the modalities of input data 301, e.g., object history 302 and traffic light information 304, can have a temporal dimension as the corresponding portions of input data 301 vary with time. Correspondingly, $N_T$ embeddings can be used to provide a historical context of the changing driving environment, e.g., as evolved from a certain time in the past, e.g., time $-T$, to the present time, referred to as time 0 (with, e.g., each time interval $\Delta t = T/N_T$ being characterized by a corresponding embedding. Accordingly, a tensor of dimension $N_T \times D_H$ (or $N_T \times D$, if projection 310 is used) can be used to represent object history 302 (and, similarly, traffic light info 304). The time duration $T$ can range from several seconds to several tens of seconds, in one example non-limiting implementation.

The term "embedding" ("feature vector"), as used throughout the instant disclosure, should be understood as any suitable digital representation of a respective object (or a set of multiple objects or scene), e.g., as a vector (string) of any number of components, which can have integer values or floating-point values. Object embeddings can be considered as vectors or points in a multi-dimensional embedding space. The dimensionality of the embedding space (defined as part of a relevant model architecture, e.g., encoder 320, decoder 330, etc.) can be smaller than the size of the data represented by the corresponding embeddings, e.g., dimensionality $D_H$ of the embedding representing object history 302 can be smaller (in some instances, significantly smaller) than the dimensionality of the underlying data (e.g., images acquired by the sensing system, positions/velocities of the objects identified in the environment), and/or the like. Embeddings can be generated by a suitably trained model. For example, embeddings representing object history 302 can be generated using object detection module 132 and/or various other components, e.g., motion tracking models. During training of the embeddings-generated models (e.g., object detection module 132, etc.), the models learn to associate similar data with similar embeddings represented by points closely situated in the embedding space and learns to associate dissimilar data with points that are located further apart in that space.

Embeddings representative of input data 301 can be processed by encoder 320. Encoder 320 generates a scene embedding 322 that captures a current state of the driving environment, evolved from time $-T$ in the past to the present time 0. Scene embedding 322 captures motion of different objects in the driving environment during time T, various interactions between the objects (e.g., a car stopping to let a pedestrian cross the roadway), state of traffic lights of the driving environment, roadway layout, and/or the like. Scene embedding 322 can further encode the vehicle's intent in the context of the state of the driving environment.

Encoder 320 can be a neural network with a suitable architecture, e.g., attention-based transformed architecture. In one example embodiment, encoder 320 can include one or more spatial encoder blocks and one or more temporal encoder blocks. In some implementations, e.g., of late-fusion encoders 320, input data 301 of different modalities can be processed independently from other modalities, e.g., a separate set of encoder blocks can process object history 302 embeddings, another set of encoder blocks can process traffic light information 304, and so on. In such implementations, to simplify the neural architecture and harmonize the size of the encoder blocks, the embeddings corresponding to different modalities of input data 301 can be first transformed to the same dimension $D$ using projection stage 310. In early-fusion encoders 320, embeddings corresponding to different modalities of input data 301 can first be concatenated and then processed together with larger cross-modal encoder blocks. In such implementations, the embeddings representing different modalities of input data 301 can maintain the original dimensions (and no projection stage 310 is used). In some implementations, an intermediate hierarchical architecture can be used with a first set of modality-specific encoder blocks processing separately different modalities of input data 301 before aggregating (concatenating) intermediate outputs and processing the aggregated intermediate outputs using a second set of cross-modal encoder blocks.

In some implementations, encoder 320 can include single-axis (e.g., temporal or spatial) attention blocks and/or multi-axes attention blocks. Single-axis attention blocks compute attention scores across either temporal $N_T$ (for temporal attention blocks) or spatial $D$ (for spatial attention blocks) dimensions. Multi-axes attention blocks compute attention scores simultaneously across both the temporal $N_T$ and spatial $D$ dimensions. Each attention (single-axis or multi-axes) block can include one or more multi-head self-attention layers, multilayer perception layers, addition-and-normalization layers, skipped (residual) connections, and/or other elements of neural network architecture. Multiple single-axis or multi-axes blocks can then be stacked together. In the instances of single-axis blocks, one or more temporal blocks can be interspaced with one or more spatial blocks.

Scene embedding 322 can be used as one of inputs into the decoder 330 portion of the autoregressive model. Decoder 330 can be trained to autoregressively generate sets of motion tokens 332-1, 332-1, ... 332-$M$ associated with $M$ future times $t_1$, $t_2$, ... $t_M$, each set of tokens predicting a distribution of states of the vehicle's (e.g., autonomous vehicle's) trajectory for the respective time $t_j$. The number of motion tokens $n$ in each set of motion tokens 332-j (where $j \in [1, M]$) can be a hyperparameter that is set as part of the decoder 330 architecture before training of the autoregressive model, e.g., $n = 32$, 128, or any other suitable number ($n = 4$ case is illustrated for conciseness in **FIG. 3**). Each of $n$ motion tokens (illustrated as a respective column in a set of motion tokens 332-j **FIG. 3**) characterizes a possible state of motion of the vehicle at time $t_j$. In some implementations, motion tokens 332-1, 332-1, ... 332-$M$ can specify transitions between states of motion with the states of motion tracked separately. For example, motion tokens 332-j can characterize an acceleration $a(t_j)$ at time $t_j$ while state of the vehicle (or some other object) may include the location (e.g., coordinates) and velocity (e.g., one or more components), $S(t_j) = \{X(t_j), V(t_j)\}$. The state can be tracked by a separate tracker component (not shown in FIG. 3), that updates the state based on the corresponding motion token 332-j, e.g., as $S(t_j) \rightarrow S(t_{j+1}) = \{X(t_j) + V(t_j)(t_{j+1} - t_j) + a(t_j)(t_{j+1} - t_j)^2/2, V(t_j) + a(t_j)(t_{j+1} - t_j)\}$, in one example non-limiting implementation. The coordinate and velocity in the state of the vehicle and the acceleration in the token can be two-dimensional (or three-dimensional) vectors, e.g., with separate components along two (three) spatial dimensions.

In other implementations, motion tokens 332-1, 332-1, ... 332-$M$ can explicitly identify locations $X(t_j)$ velocities $V(t_j)$ of the vehicle, and/or various other characteristics of vehicle's motion, including but not limited to acceleration/braking status, steering status (e.g., turning, going straight, back, etc.), lane occupied, and/or the like.

Each motion token can be a vector in a space of tokens whose dimensionality can be set as part of the model architecture. Each motion token can be associated with a probability $p_1(t_j)$, $p_2(t_j)$, ... $p_n(t_j)$, indicating a likelihood that the corresponding state of the motion of the vehicle will be realized at the respective time $t_j$. The probabilities can be normalized, e.g., $p_1(t_j) + p_2(t_j) + ... + p_n(t_j) = 1$. In one illustrative example, probability $p_1(t_j)$ can indicate a likelihood that the vehicle has not yet reached (at time $t_j$) an intersection, probability $p_2(t_j)$ can indicate a likelihood that the vehicle has entered the intersection and is moving with speed 10 mph, probability $p_3(t_j)$ can indicate a likelihood that the vehicle has entered the intersection and is moving with speed 25 mph, probability $p_4(t_j)$ can indicate a likelihood that the vehicle has passed the intersection and is moving with speed 35 mph, and/or the like.

Decoder 330 can be (or include) a transformer-based neural network that has one or more cross-attention blocks, in which inputs 328-1, 328-2, ... 328-$M$ are cross-attended with the scene embedding 322 to produce sets of motion tokens 332-1, 332-1, ... 332-$M$. Additionally, decoder 330 can include one or more self-attention layers, addition and normalization layers, skipped (residual) connections, and/or other elements.

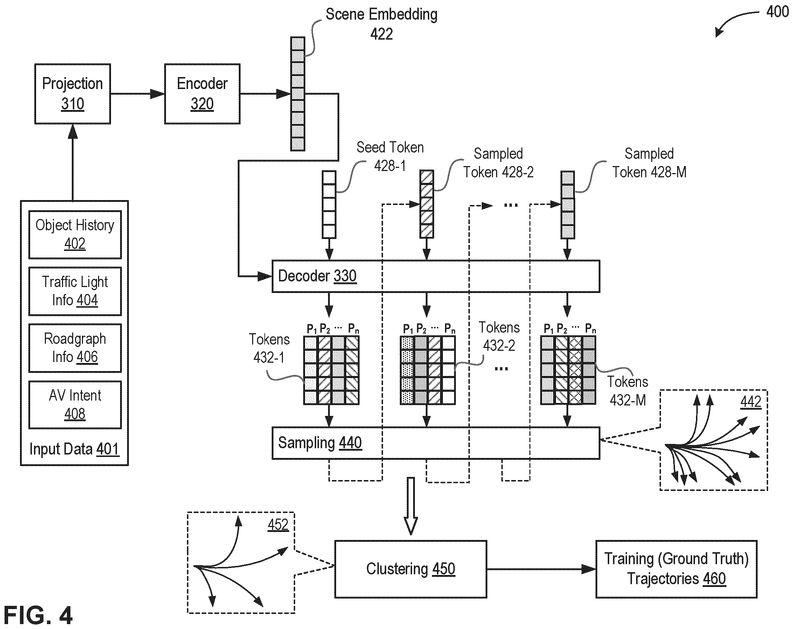

During the inference with the autoregressive model, the motion tokens generated for each of the times $t_1$, $t_2$, ... $t_M$ can be sampled, e.g., as described in more detail in conjunction with **FIG. 4** below, and the sampled motion tokens can be used as inputs into subsequent stages (iterations) of decoder 330 processing. For example, a motion token sampled from a set of motion tokens 332-j (generated for time $t_j$) can be used as an input (seed) 328-j into $j$-th stage of decoder 330 processing that produces motion tokens for time $t_j$, and so on.

During training of the autoregressive model, inputs 328-1, 328-2, ... 328-$M$ can be taken from real trajectories 360, e.g., obtained from observed trajectories recorded during driving missions of one or more test vehicles. Although test vehicles can be autonomous vehicles, real trajectories 360 (e.g., real trajectories 252 in **FIG. 2**) can also be recorded during driving missions of human-operated test vehicles. More specifically, an observed trajectory of the test vehicle can be partitioned into portions associated with times $t_1$, $t_2$, ... $t_M$ and a state of the test vehicle's motion at each of those times, e.g., $t_j$ can be encoded as a respective motion token, which is then used as a seed input into operations of decoder 330 that generate a set of tokens for the next time $t_{j+1}$. In some implementations, training of decoder 330 (and/or encoder 320) can be performed using input data 301 collected in conjunction with real trajectories 360, during test driving missions, as illustrated schematically with dashed arrow 362.

Training engine 242 can then examine various motion tokens of the generated $t_j$ set of tokens and can use a suitably-chosen loss function 350 to quantify a difference between the state of the real trajectory at time $t_j$ and various predictions outputted by decoder 330. In some implementations, training engine 242 can train decoder 330 to predict a correct $t_j$ token for the real trajectory 360 with the maximum probability. More specifically, training engine 242 can identify a motion token generated by decoder 330 and associated with the highest predicted probability $p$ and compare this motion token with the real-trajectory token for the time $t_j$ (taken as ground truth) using loss function 350. In some implementations, loss function 350 can be a mean squared error loss or some other loss function. The computed loss function 350 can be used to modify (train) various parameters of decoder 330, as illustrated schematically with the dashed arrow 352, e.g., using various techniques of backpropagation, gradient descent, and/or other training techniques. In some implementations, loss function 350 can further be used to train parameters of encoder 320, as illustrated schematically with the dashed arrow 354. Some, any, or all $M$ stages (iterations) $t_1$, $t_2$, ... $t_M$ of the decoder 330 processing can be used to train parameters of decoder 330 and/or encoder 320.

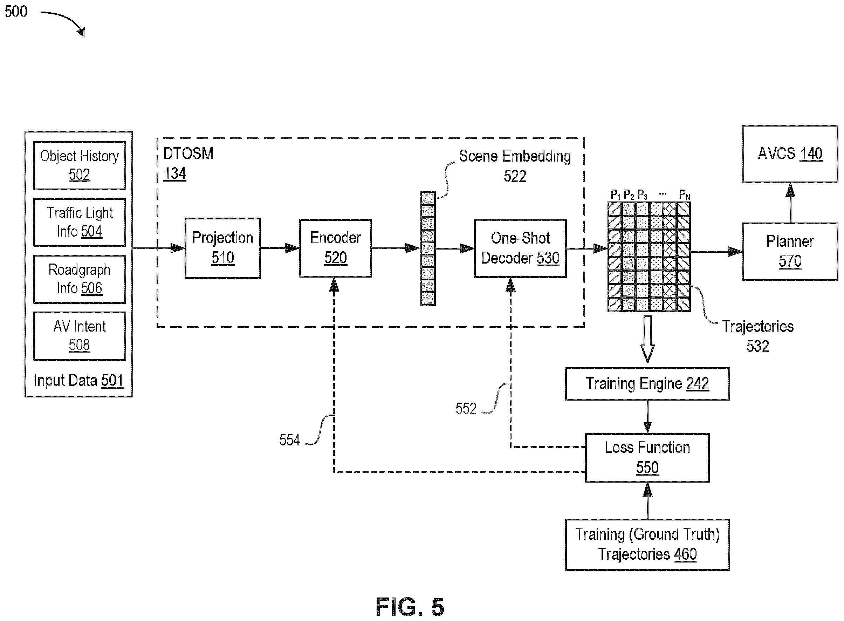

**FIG. 4** is a schematic diagram illustrating an example workflow 400 of deployment of the autoregressive model for generation of distillation training data, in accordance with some implementations of the present disclosure. Workflow 400 can be used to deploy an autoregressive model, e.g., a model trained as disclosed above in conjunction with **FIG. 3,** The autoregressive model can be used in the inference mode to process input data 401 and obtain the inference output, which is then used as ground truth for the distillation training of a one-shot student model (e.g., as disclosed below in conjunction with **FIG. 5**). The autoregressive model can include various blocks, subnetworks, and/or components illustrated in **FIG. 3,** e.g., projection stage 310, encoder 320, and decoder 330, in one example.

Input data 401 can include some or all of the object history 402, traffic light information 404, roadgraph information 406, AV intent 408, and/or the like. Input data 401 can have the same format (e.g., number of input modalities, dimensions of the respective embeddings, and/or the like) as input data 301 that was used during training of the (teacher) autoregressive model. In some implementations, input data 401 can be data previously unseen (e.g., during training, validation, and/or testing) of the autoregressive model. In some implementations, input data 401 can include some of the input data 301 that was used for training of the autoregressive model.

In some implementations, input data 401 can be processed by projection stage 310 that harmonizes dimensions of embeddings representing different input modalities. Deployment of the projection stage 310 can be contingent on whether a similar projection stage was used during training of the autoregressive model. Embeddings representing input data 401 (projected or unprojected) can be processed by encoder 320 that generates a scene embedding 422 that captures vehicle's intent, current state, and various interdependencies of the driving environment, as represented by input data 401.

Scene embedding 422 can be used as a context input into decoder 330. Decoder 330 is trained to autoregressively generate sets of motion tokens 432-1, 432-1, ... 432-$M$ (a vector in the space of tokens) associated with $M$ future times $t_1, t_2, ... t_M$, with each set of motion tokens predicting a distribution of states of the vehicle's trajectory at the respective time $t_j$. The number of motion tokens $n$ in each set of motion tokens 432-j (where $j \in [1, M]$) is set in conjunction with the architecture and training of the autoregressive model. Each of $n$ motion tokens may characterize a possible state of motion of the vehicle at time $t_j$, such as location $X(t_j)$ of the vehicle, velocity $V(t_j)$ of the vehicle, acceleration/braking status, steering status, and/or various other characteristics of vehicle's motion. Alternatively, motion tokens 432-j may characterize an acceleration $a(t_j)$ at time $t_j$ while state (location and velocity) of the vehicle tracked separately, e.g., as described above in conjunction with FIG. 3. Each motion token can be associated with a probability $p_1(t_j), p_2(t_j), ... p_n(t_j)$, indicating a likelihood that the corresponding state of the motion of the vehicle will be realized at respective time $t_j$.

Sampling module 440 can sample motion tokens generated for various times $t_1, t_2, ... t_M$. In particular, a motion token sampled from a set of motion tokens 432-j generated by decoder 330 for time $t_j$ can be used as input 428-(j+1) into the next iteration $(t_{j+1})$ of decoder 330 processing. A motion token for the first iteration can be a seed token 428-1, e.g., a fixed token that is independent of input data 401 (or scene embedding 422). In some implementations, seed token 428-1 can be representative of at least some aspects of the driving environment (e.g., rural driving environment, urban driving environment, and/or the like). In some implementations, seed token 428-1 can be obtained from scene embedding 422, e.g., using a matrix multiplication with learned weights (matrix elements).

Sampling 440 can select any number of motion tokens from each set of motion tokens 432-1, 432-2, ... 432-$M$. Consequently, $j$-th stage of decoder 330 processing can include one or more instances of application of decoder 330 to a different motion token. In some implementations, motion tokens associated with low probabilities $p$ (e.g., below a certain empirically set or learned predetermined probability $p_T$) can be ignored by sampling module 440. Accordingly, sampling can then be performed from motion tokens associated with high probabilities, $p > p_T$. In some implementations, sampling 440 can be performed using Monte-Carlo techniques, e.g., with the likelihood of selecting a particular motion token (as a seed input into the next iteration) determined by the respective probability $p$, e.g., with motion tokens associated with higher probabilities $p$ selected with a higher likelihood than motion tokens associated with lower probabilities $p$.

Sampling 440 of motion tokens and processing the sampled motion tokens by decoder 330 can generate a tree of trajectories, with seed token 428-1 representing a root of the tree, the first set of motion tokens 432-1 representing the first level of tree branches, the second set of tokens 432-2 representing the second level of tree branches, and so on. Some of the tree branches can be terminated early and not produce downstream branches, e.g., a low-probability motion token of the first set of motion tokens 432-1 may never be sampled, whereas a high-probability motion token of the first set of motion tokens 432-1 can generate a large family of trajectories with multiple downstream motion tokens sampled at many (or all) stages of sampling 440 processing.

An output of sampling 440 and decoder 330 processing can include predicted trajectories 442. Individual trajectories 442 can be associated with a corresponding probability of their occurrences. In some implementations, a number of predicted trajectories 442 can be a fixed number $N_1$ (e.g., $N_1 = 128$, 140, etc.). In some implementations, the number of predicted trajectories 442 need not be fixed (since operations of workflow 400 can be performed offline and need not be limited by the amount of processing operations being performed) and can itself be determined in the course of sampling operations. For example, additional predicted trajectories 442 can be generated (by sampling additional motion tokens) until further trajectories are predicted to have a consistently low probability of occurrence (e.g., below a certain limit), at which point further sampling can be stopped.

Clustering 450 can then identify a smaller number $N_2$ of aggregated trajectories 452. For example, different trajectories that represent small variations can be identified as belonging to the same cluster of predicted trajectories 442 and a representative trajectory (e.g., a centroid trajectory) can be included into aggregated trajectories 452. Clustering 450 can be performed using non-maximal suppression, K-means clustering, Gaussian mixture models, centroid-based clustering, density-based clustering, distribution-based clustering, hierarchical clustering, and/or other suitable clustering techniques. In some implementations, the number $N_2$ can be significantly smaller than $N_1$ (e.g., $N_2$ = 12, 16, etc.). In some implementations, the number $N_2$ can be a fixed number of trajectories that a student one-shot model will be trained to predict (e.g., as disclosed in more detail in conjunction with **FIG. 5** below). Aggregated trajectories 452 can then be stored as ground truth trajectories 460 (e.g., teacher model-generated trajectories in **FIG. 2**) for training of a one-shot model.

**FIG. 5** is a schematic diagram illustrating operations 500 of a one-shot trajectory prediction model that is trained using distillation techniques, in accordance with some implementations of the present disclosure. Operations 500 can be performed as part of training of a one-shot trajectory prediction model and/or as part of inference using the trained one-shot trajectory prediction model. In some implementations, the one-shot prediction model can be DTOSM 134 of **FIG. 1** and **FIG. 2.** One-shot model can include encoder 520 and one-shot decoder 530 and can further include a projection stage 510 (that operates similarly to projection stage 310 of **FIG. 3** and **FIG. 4**). In some implementations, encoder 520 can be the same (or similar) to encoder 320 of the autoregressive model. In some implementations, encoder 520 of the one-shot model can be different from encoder 320, e.g., trained together with one-shot decoder 530.

Input data 501 into the one-shot model can include some or all of the object history 502, traffic light information 504, roadgraph information 506, AV intent 508, and/or the like. Input data 501 can have the same format (e.g., number of input modalities, dimensions of the respective embeddings, and/or the like) as input data 301 used during training of the (teacher) autoregressive model and/or input data 401 used during inference processing (ground truth trajectory generation) by the trained autoregressive model. For example, training of the one-shot model can be performed using training data that includes training inputs and target outputs. More specifically, training inputs can include training data 401 used by the autoregressive model to generate predicted trajectories 442 (as described above in conjunction with **FIG. 4**). Target outputs can include aggregated trajectories 452 that are then used as ground truth trajectories 460 for training of the one-shot model.

In some implementations, input data 501 used in training of the one-shot model can be data collected during (or with the help of) actual (test) driving missions (e.g., similarly to how input data 301 is collected). In some implementations, input data 501 used in training can be (or include) synthetic data generated by training engine 242. For example, training engine 242 can generate a synthetic driving scene (which can be based on a map of a real driving environment, e.g., an intersection, a stretch of a highway, an urban neighborhood, and/or the like) including placing a vehicle (e.g., a synthetic autonomous vehicle) and other animate objects (other vehicles, pedestrians, and/or road users) within the driving scene, assigning an intent to the vehicle and other animate objects, selecting a traffic light schedule, and/or the like. Training engine 242 can then generate input data 501 corresponding to the synthetic objects' history (over a certain time preceding the current time) and then use this generated input data 501 to train the one-shot model using training (ground truth) trajectories 460 obtained by processing the same input data 501 with the autoregressive teacher model. In some implementations, input data 501 can be a combination of data collected in conjunction with real (test) driving missions and synthetic augmentation data generated by training engine 242. For example, data collected during a single real driving mission can be modified or augmented with synthetic data (e.g., a different placement and/or intent of various road users) to obtain many sets of different inputs, for increased efficiency and diversity of training of the one-shot model.

In some embodiments, encoder 520 and/or one-shot decoder 530 can have an architecture that is similar to architecture of encoder 320 and decoder 330, respectively, and can include elements of transformer architecture, such as self-attention blocks and multilayer perceptron blocks in encoder 520 and/or one-shot decoder 530 and cross-attention blocks in one-shot decoder 530. In some implementations, the number of self-attention blocks, cross-attention blocks, and/or multilayer perceptron blocks in one-shot decoder 530 (and, in some implementations, encoder 520) can be different-e.g., smaller (to reduce latency)-than the number of the corresponding blocks in decoder 330 (and encoder 320) of the autoregressive model.

Embeddings representative of input data 501 can be projected to a predetermined number of dimensions by projection stage 510 (in some implementations, the embedding can be unprojected). The embeddings can be processed by encoder 520 that generates a scene embedding 522 that captures vehicle's intent, current state, and various interdependencies of the driving environment, as represented by input data 501. In some implementations, scene embedding 522 can be the same as scene embedding 422 generated (for the same input data 401/501) by the autoregressive model, e.g., when encoder 520 is the same as encoder 320.

Scene embedding 522 can be used as an input into one-shot decoder 530. One-shot decoder 330 generates a set of trajectories 532. Trajectories 532 can differ from motion tokens 432-j in that-unlike motion tokens that characterize a possible state of motion of the vehicle at specific times-trajectories 532 characterize vehicle's state of motion for an entire sequence of $M$ future times $t_1, t_2, \ldots t_M$. For example, characterization of the vehicle's state of motion can include a set of locations $\{X(t_j)\} = X(t_1), X(t_2), \ldots X(t_M)$ of the vehicle, a set of corresponding velocities $\{V(t_j)\}$ of the vehicle, a set of indications of vehicle's acceleration/braking, steering, and/or various other characteristics of vehicle's motion. In some implementations, the number of trajectories 532 can be the same as the number $N_2$ of aggregated trajectories 452 of workflow 400 of **FIG. 4.** Each trajectory 532 can be associated with a respective probability $P$ indicative of a likelihood that such a trajectory will be realized in the course of the vehicle's motion.

During training of the one-shot model, training engine 242 can compare various trajectories 532 generated by one-shot decoder 530 with training (ground truth) trajectories 460, e.g., Aggregated trajectories 452 outputted by the autoregressive model operating in the inference mode. A suitably chosen loss function 550 can be used to evaluate differences between trajectories 532 and training (ground truth) trajectories 460. In some implementations, loss function 550 can be a mean squared error loss function, mean absolute error loss function, binary cross-entropy loss function, and/or some other loss function. In some implementations, training engine 242 can train one-shot decoder 330 to predict the same training (ground truth) trajectories 460 as predicted by the autoregressive (teacher) model. In some implementations, training engine 242 can further train one-shot decoder 330 to match the probabilities $P$ for various predicted trajectories 532 to the corresponding probabilities $p$ of different training (ground truth) trajectories 460. The computed loss function 550 representative of the differences between predicted trajectories and ground truth trajectories, and between predicted probabilities $P$ and ground truth probabilities $p$, can be used to modify (train) various parameters of one-shot decoder 530, as illustrated schematically with the dashed arrow 552, e.g., using various techniques of backpropagation, gradient descent, and/or other training techniques. In some implementations, loss function 550 can also be used to train parameters of encoder 520, as illustrated schematically with the dashed arrow 554.

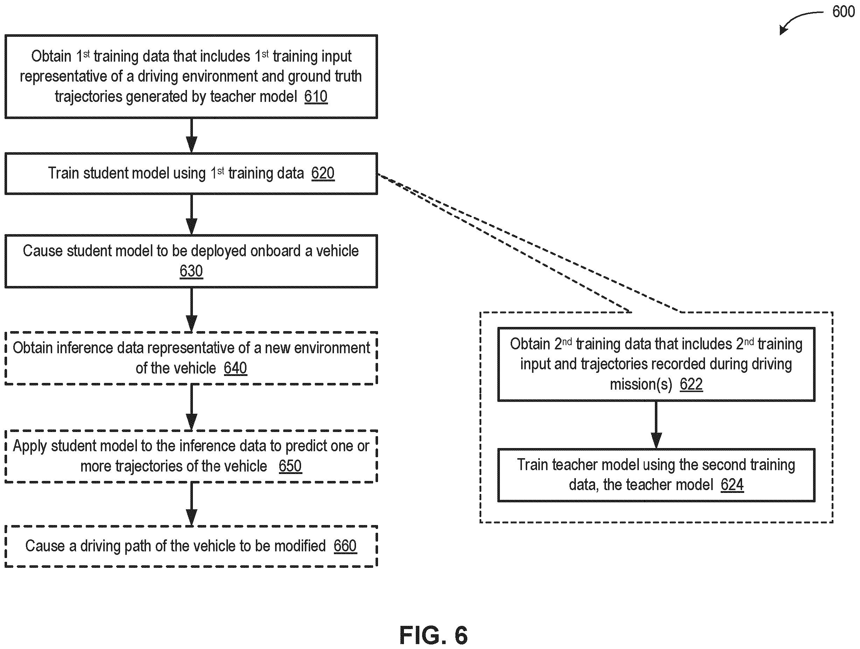

In some implementations, training (ground truth) trajectories 460 can include, e.g., in addition to (or instead of) the aggregated trajectories 452 outputted by the autoregressive model, the trajectories for training of the one-shot model can include ground truth trajectories used for training of the teacher model (e.g., real trajectories 360 in FIG. 6). In some implementations, two sets of loss function values can be computed, af first set of loss function values characterizing a difference between trajectories 532 and aggregated trajectories 452 and a second set of loss function values characterizing a difference between trajectories 532 and real trajectories 360. The two sets of loss function values can be taken with different relative weights, e.g., empirically selected. In some implementations the relative weights can be changed between different training epochs, e.g., with more weights given to the first set of loss function values during earlier epochs of training and more weights given to the second set of loss function values during later epochs of training (or vice versa).

Training of the one-shot model can continue until a target accuracy in trajectory determination (including probabilities) is achieved or until the model reaches a plateau in performance and does not further improve with additional sets of training inputs. After training, the one-shot model can be used for inferences in actual driving missions. During inference, trajectories 532 outputted by the one-shot model (e.g., DTOSM 134) can be provided to a planner 570 that uses the predicted trajectories to evaluate the current and possible future states of the driving environment in view of the predicted probabilities $P$ and can select an optimal driving path of the vehicle. The planner 570 can generate instructions to AVCS 140 to implement the selected driving path. AVCS 140 can then provide instructions to specific systems and components of the vehicle-including but not limited to the powertrain, brakes, and steering 150, vehicle electronics 160, signaling 170, and/or the like-to take and maintain the vehicle on the selected driving path.

Multiple variations of the above-disclosed implementations are within the scope of the present disclosure. For example, for brevity and conciseness, operations illustrated in conjunction with **FIG. 3, FIG. 4,** and **FIG. 5** are described as predicting trajectories for a vehicle that deploys the model (e.g., the one-shot model). In some implementations, the autoregressive teacher model and the one-shot student model can be trained to jointly predict trajectories of the vehicle and one or more other objects in the environment. In such implementations, the outputs of the autoregressive model and the one-shot model can be the joint probabilities of various co-occurring states of the vehicle $S_{VEH}(t_j)$ and the object(s) $S_{OBJ}(t_j)$, e.g., $P(S_{VEH}(t_j), S_{OBJ}(t_j))$ can be a joint probability for one object whose trajectory is being co-tracked together with the vehicle's trajectory (although trajectories of any number of objects can be predicted using these techniques).

More specifically, to jointly predict trajectories of one or more objects, separate scene embeddings 322 (and, similarly, scene embeddings 422 and 522) can be generated by encoder 320 or encoder 520 for each of the vehicle and the object(s). (In some implementations, a single joint scene embedding is generated). Decoder 330 and/or one-shot decoder 530 can then process the scene embedding to predict the joint probabilities of co-occurring trajectories of the vehicle and the object(s). One-shot decoder 530 of DTOSM 134 can output such probabilities after one iteration of processing whereas decoder 330 of the autoregressive teacher model can perform multiple iterations, each iteration using sampled tokens 428-j produced (during previous iterations) individually for the vehicle and the object. Correspondingly, a separate set of predicted trajectories 442 and a separate set of aggregated trajectories 452 can be obtained individually for the vehicle and the object. The aggregated trajectories 452 can then be used as training (ground truth) trajectories during training of the one-shot model, substantially as described above.

In some implementations, instead of (or in addition) to jointly predicting trajectories of various objects and the AV, an intervention behavior prediction (IBP) may be performed. As part of IBP processing, training engine 242 can select one or more training trajectories 460 and simulate the motion of the AV along the selected trajectory(ies). As the AV progresses along a given selected trajectory, training engine 242 can cause the teacher model to generate additional trajectories of other objects that are determined in view of the motion of the AV along the selected trajectory. At various times $t_j$, the sampling of tokens can maintain the AV along the selected trajectory while sampling tokens (generated by the teacher model) corresponding to motion of other objects to generate training trajectories of those other objects. The generated trajectories can then be used to train DTSOM 134.

**FIG. 6** illustrates an example method 600 of training and deploying one-shot models capable of predicting trajectories of vehicles and other objects in driving environments, in accordance with some implementations of the present disclosure. A processing device, having one or more processing units (CPUs), one or more graphics processing units (GPUs), one or more parallel processing units (PPUs) and memory devices communicatively coupled to the CPU(s), GPU(s), and/or PPU(s) can perform method 600 and/or each of its individual functions, routines, subroutines, or operations. Method 600 can be directed to systems and components of a vehicle. In some implementations, the vehicle can be an autonomous vehicle (AV), such as AV 100 of **FIG. 1.** In some implementations, the vehicle can be a driver-operated vehicle equipped with driver assistance systems, e.g., Level 2 or Level 3 driver assistance systems, that provide limited assistance with specific vehicle systems (e.g., steering, braking, acceleration, etc. systems) or under limited driving conditions (e.g., highway driving). The processing device executing method 600 can perform instructions issued by training engine 242 of **FIG. 2** and/or various components of the perception and planning system 130 of **FIG. 1.** In one example, operations of method 600 can be directed to training of DTOSM 134, deployment of DTOSM 134 onboard a vehicle, and use of DTOSM 134 for trajectory prediction (inference) during operations of the vehicle. In certain implementations, a single processing thread can perform method 600. Alternatively, two or more processing threads can perform method 600, each thread executing one or more individual functions, routines, subroutines, or operations of the method. In an illustrative example, the processing threads implementing method 600 can be synchronized (e.g., using semaphores, critical sections, and/or other thread synchronization mechanisms). Alternatively, the processing threads implementing method 600 can be executed asynchronously with respect to each other. Some operations of method 600 can be performed in a different order compared with the order shown in **FIG. 6.** Some operations of method 600 can be performed concurrently with other operations. Some operations can be optional.

At block 610, method 600 can include obtaining first training data for training a one-shot model (also referred to as student model herein). The training data can include a first training input (e.g., input data 401 in **FIG. 4**) representative of a driving environment of a vehicle (e.g., an autonomous vehicle or a vehicle equipped with driver assist technology). The driving environment can include one or more objects. The training data can further include one or more ground truth trajectories (e.g., training trajectories 460 in **FIG. 4**) associated with a forecasted motion of the vehicle within the driving environment. The one or more ground truth trajectories can be generated by a teacher model using the first training input (e.g., as illustrated in **FIG. 4**).

In some implementations, the first training input can include a history of motion of (i) the vehicle and (ii) the one or more objects (e.g., object history 402 in **FIG. 4**). In some implementations, the first training input can further include a status of one or more traffic lights of the driving environment of the vehicle (e.g., traffic light information 406 in **FIG. 4**), a roadgraph information associated with the driving environment of the vehicle (e.g., roadgraph information 406 in **FIG. 4**), and/or a representation of a target route of the vehicle (e.g., AV intent 408 in **FIG. 4**) through the driving environment of the vehicle. In some implementations, each of the teacher model and the student model can include one or more self-attention blocks of artificial neurons, one or more cross-attention blocks of artificial neurons, and/or one or more multilayer perceptron blocks of artificial neurons.

At block 620, method 600 can continue with training, using the training data, a student model to predict one or more trajectories. Training the student model can include reducing a difference between the one or more trajectories predicted by the student model and the one or more ground truth trajectories (e.g., using loss function 550, as illustrated in **FIG. 5**). In some implementations, the one or more trajectories predicted by the student model can include a first set of probable trajectories of the vehicle. For example, individual probable trajectories of the first set of probable trajectories of the vehicle can include one or more locations of the vehicle at corresponding one or more future times. In some implementations, individual probable trajectories of the first set of probable trajectories of the vehicle can further include one or more velocities of the vehicle at the corresponding one or more future times, and may also include additional predictions of the state of the vehicle, such as acceleration/braking status, steering status, status of signaling lights of the vehicle, and/or the like.

In some implementations, the one or more trajectories predicted by the student model can include a second set of probable trajectories of at least one object of the one or more objects of the driving environment of the vehicle. For example, trajectories of both the vehicle and one or more closest to the vehicle objects can be predicted by the student model.

In some implementations, each of the one or more predicted trajectories can include a plurality of temporal segments. The plurality of temporal segments of a respective predicted trajectory can be generated in parallel. In some implementations, temporal segments of multiple (e.g., some or all) predicted trajectories can be generated in parallel.

In some implementations, each of the one or more ground truth trajectories can include a similar plurality of temporal segments, with the plurality of temporal segments of a respective ground truth trajectory generated iteratively by a teacher model. In particular, a later temporal segment $t_{j+1}$ of the respective ground truth trajectory can be predicated on at least one earlier temporal segment, e.g., $t_j$, of the respective ground truth trajectory.

In some implementations, the teacher model can be trained using operations illustrated with the callout portion of **FIG. 6.** More specifically, at block 622, training of the teacher model can include obtaining a second training data. The second training data can include a second training input (e.g., input data 301 of **FIG. 3**). The second training input can be associated with one or more driving missions (e.g., of a physical vehicle, autonomous or human-operated). The second training data can further include one or more trajectories of the vehicle recorded during the one or more driving missions (e.g., real trajectories 360 of **FIG. 3**). In some implementations, the second training input (used for training of the one-shot student model) can include the first training input (used for training of the autoregressive teacher model). At block 624, method 600 can include training, using the second training data, the teacher model to generate one or more training trajectories of the vehicle (e.g., training trajectories 460 of of FIG. 4, which can be represented collectively by sets of motion tokens 332-1... 332-*M* of **FIG. 3**). Training the teacher model can include reducing a difference (e.g., using loss function 350 in **FIG. 3**) between the one or more training trajectories of the vehicle and the one or more recorded trajectories of the vehicle.

At block 630, method 600 can continue with causing the student model to be deployed onboard a vehicle (e.g., an autonomous vehicle). For example, the trained student model (e.g., DTOSM 134) can be uploaded from training server 240 (with reference to **FIG. 2**) to perception and planning system 130 of the vehicle. At block 640, method 600 can include obtaining inference data (e.g., input data 501 of **FIG. 5**) representative of a new environment of the autonomous vehicle (e.g., an environment encountered during one of post-deployment driving missions). At block 650, method 600 can include applying the student model (e.g., DTOSM 134) to the inference data to predict one or more trajectories (e.g., trajectories 532 of **FIG. 5**) of the vehicle in the new environment. At block 660, method 600 can continue with causing a driving path of the vehicle to be modified in view of the one or more predicted trajectories of the vehicle. For example, the vehicle can decelerate, change driving lane, stop, make a turn, and/or perform any suitable driving maneuver. In one example implementation, the autonomous vehicle control software can determine that a previously selected driving path has a low probability of being completed, e.g., because other vehicles or objects (pedestrians) can interfere with (e.g., block or make unsafe) the selected driving path. For example, the selected driving path can be determined to have a substantial likelihood of making contact with other objects. Responsive to such a determination, the control software can replace the previously selected driving path with a new driving path, e.g., based on one or more of the predicted trajectories. The new driving path can be selected based on a high probability of successfully traveling through a portion of the environment, on minimizing a likelihood of a collision (contact) with other objects, and/or the like. In some implementations, a driving path can be selected based on a trajectory that maintains a minimum distance to other objects. A selected driving path can then be implemented by the control software outputting instructions to one or more systems of the vehicle, e.g., powertrain, brakes, and steering 150, vehicle electronics 160, signaling 170, and other systems and components not explicitly shown in **FIG. 1.**

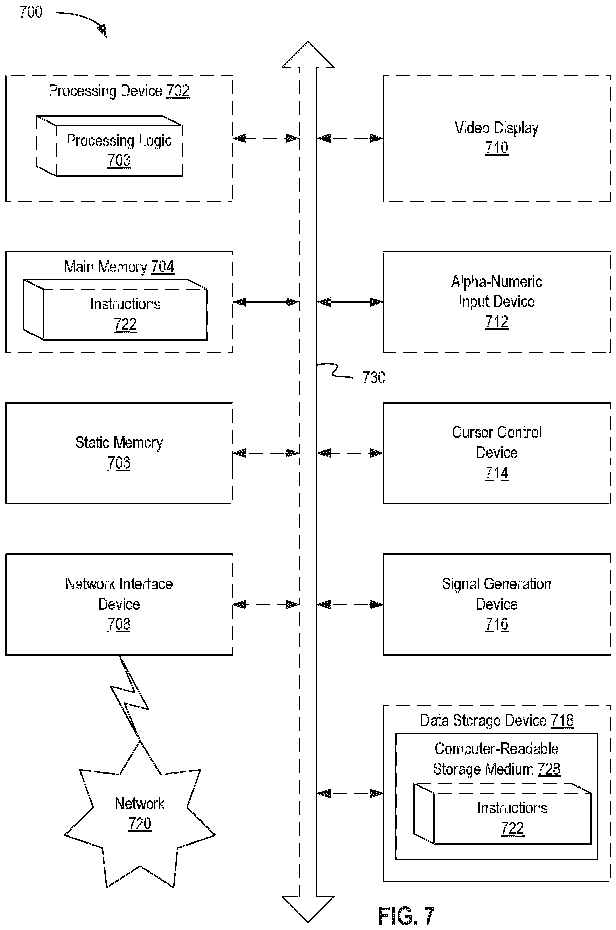

**FIG. 7** depicts a block diagram of an example computer device 700 capable of training and deploying one-shot models capable for predicting trajectories of vehicles and other objects in driving environments, in accordance with some implementations of the present disclosure. Example computer device 700 can be connected to other computer devices in a LAN, an intranet, an extranet, and/or the Internet. Computer device 700 can operate in the capacity of a server in a client-server network environment. Computer device 700 can be a personal computer (PC), a set-top box (STB), a server, a network router, switch or bridge, or any device capable of executing a set of instructions (sequential or otherwise) that specify actions to be taken by that device. Further, while only a single example computer device is illustrated, the term "computer" shall also be taken to include any collection of computers that individually or jointly execute a set (or multiple sets) of instructions to perform any one or more of the methods discussed herein.

Example computer device 700 can include a processing device 702 (also referred to as a processor or CPU), a main memory 704 (e.g., read-only memory (ROM), flash memory, dynamic random access memory (DRAM) such as synchronous DRAM (SDRAM), etc.), a static memory 706 (e.g., flash memory, static random access memory (SRAM), etc.), and a secondary memory (e.g., a data storage device 718), which can communicate with each other via a bus 730.

Processing device 702 (which can include processing logic 703) represents one or more general-purpose processing devices such as a microprocessor, central processing unit, or the like. More particularly, processing device 702 can be a complex instruction set computing (CISC) microprocessor, reduced instruction set computing (RISC) microprocessor, very long instruction word (VLIW) microprocessor, processor implementing other instruction sets, or processors implementing a combination of instruction sets. Processing device 702 can also be one or more special-purpose processing devices such as an application specific integrated circuit (ASIC), a field programmable gate array (FPGA), a digital signal processor (DSP), network processor, or the like. In accordance with one or more aspects of the present disclosure, processing device 702 can be configured to execute instructions performing method 600 of training and deploying one-shot models capable for predicting trajectories of vehicles and other objects in driving environments.

Example computer device 700 can further comprise a network interface device 708, which can be communicatively coupled to a network 720. Example computer device 700 can further comprise a video display 710 (e.g., a liquid crystal display (LCD), a touch screen, or a cathode ray tube (CRT)), an alphanumeric input device 712 (e.g., a keyboard), a cursor control device 714 (e.g., a mouse), and an acoustic signal generation device 716 (e.g., a speaker).

Data storage device 718 can include a computer-readable storage medium (or, more specifically, a non-transitory computer-readable storage medium) 728 on which is stored one or more sets of executable instructions 722. In accordance with one or more aspects of the present disclosure, executable instructions 722 can comprise executable instructions performing method 600 of training and deploying one-shot models capable for predicting trajectories of vehicles and other objects in driving environments.

Executable instructions 722 can also reside, completely or at least partially, within main memory 704 and/or within processing device 702 during execution thereof by example computer device 700, main memory 704 and processing device 702 also constituting computer-readable storage media. Executable instructions 722 can further be transmitted or received over a network via network interface device 708.

While the computer-readable storage medium 728 is shown in **FIG. 7** as a single medium, the term "computer-readable storage medium" should be taken to include a single medium or multiple media (e.g., a centralized or distributed database, and/or associated caches and servers) that store the one or more sets of operating instructions. The term "computer-readable storage medium" shall also be taken to include any medium that is capable of storing or encoding a set of instructions for execution by the machine that cause the machine to perform any one or more of the methods described herein. The term "computer-readable storage medium" shall accordingly be taken to include, but not be limited to, solid-state memories, and optical and magnetic media.

Some portions of the detailed descriptions above are presented in terms of algorithms and symbolic representations of operations on data bits within a computer memory. These algorithmic descriptions and representations are the means used by those skilled in the data processing arts to most effectively convey the substance of their work to others skilled in the art. An algorithm is here, and generally, conceived to be a self-consistent sequence of steps leading to a desired result. The steps are those requiring physical manipulations of physical quantities. Usually, though not necessarily, these quantities take the form of electrical or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

It should be borne in mind, however, that all of these and similar terms are to be associated with the appropriate physical quantities and are merely convenient labels applied to these quantities. Unless specifically stated otherwise, as apparent from the following discussion, it is appreciated that throughout the description, discussions utilizing terms such as "identifying," "determining," "storing," "adjusting," "causing," "returning," "comparing," "creating," "stopping," "loading," "copying," "throwing," "replacing," "performing," or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

Examples of the present disclosure also relate to an apparatus for performing the methods described herein. This apparatus can be specially constructed for the required purposes, or it can be a general purpose computer system selectively programmed by a computer program stored in the computer system. Such a computer program can be stored in a computer readable storage medium, such as, but not limited to, any type of disk including optical disks, CD-ROMs, and magnetic-optical disks, read-only memories (ROMs), random access memories (RAMs), EPROMs, EEPROMs, magnetic disk storage media, optical storage media, flash memory devices, other type of machine-accessible storage media, or any type of media suitable for storing electronic instructions, each coupled to a computer system bus.

The methods and displays presented herein are not inherently related to any particular computer or other apparatus. Various general purpose systems can be used with programs in accordance with the teachings herein, or it may prove convenient to construct a more specialized apparatus to perform the required method steps. The required structure for a variety of these systems will appear as set forth in the description below. In addition, the scope of the present disclosure is not limited to any particular programming language. It will be appreciated that a variety of programming languages can be used to implement the teachings of the present disclosure.

For illustrative purposes only, a number of example methods, systems and non-transitory computer-readable memory are set out below:

Example 1. A method comprising:

obtaining first training data, wherein the training data comprises:

a first training input representative of a driving environment of a vehicle, the driving environment comprising one or more objects, and
one or more ground truth trajectories associated with a forecasted motion of the vehicle within the driving environment, wherein the one or more ground truth trajectories are generated by a teacher model using the first training input; and

training, using the training data, a student model to predict one or more trajectories,

wherein training the student model comprises reducing a difference between the one or more trajectories predicted by the student model and the one or more ground truth trajectories.

Example 2. The method of example 1, wherein the first training input representative of the driving environment of the vehicle comprises:
a history of motion of (i) the vehicle and (ii) the one or more objects.

Example 3. The method of example 2, wherein the first training input representative of the driving environment of the vehicle further comprises at least one of:

a status of one or more traffic lights of the driving environment of the vehicle,
a roadgraph information associated with the driving environment of the vehicle, or
a representation of a target route of the vehicle through the driving environment of the vehicle.

Example 4. The method of example 1, wherein the one or more trajectories predicted by the student model comprise a first set of probable trajectories of the vehicle, wherein each probable trajectory of the first set of probable trajectories of the vehicle comprises one or more locations of the vehicle at corresponding one or more future times.

Example 5. The method of example 4, wherein each probable trajectory of the first set of probable trajectories of the vehicle further comprises one or more velocities of the vehicle at the corresponding one or more future times.

Example 6. The method of example 1, wherein the one or more trajectories predicted by the student model comprise a second set of probable trajectories of at least one object of the one or more objects of the driving environment of the vehicle.

Example 7. The method of example 1, wherein each of the one or more predicted trajectories comprises a plurality of temporal segments, and wherein the plurality of temporal segments of a respective predicted trajectory are generated in parallel.

Example 8. The method of example 1, wherein each of the one or more ground truth trajectories comprises a plurality of temporal segments, and wherein the plurality of temporal segments of a respective ground truth trajectory are generated iteratively, a later temporal segment of the respective ground truth trajectory being predicated on at least one earlier temporal segment of the respective ground truth trajectory.

Example 9. The method of example 1, wherein each of the teacher model and the student model comprise one or more of:

a self-attention block of artificial neurons,
a cross-attention block of artificial neurons, or
a multilayer perceptron block of artificial neurons.

Example 10. The method of example 1, the teacher model is trained by:

obtaining a second training data, wherein the second training data comprises:

a second training input associated with one or more driving missions, and
one or more trajectories of the vehicle recorded during the one or more driving missions; and

training, using the second training data, the teacher model to generate one or more training trajectories of the vehicle, wherein training the teacher model comprises reducing a difference between the one or more training trajectories of the vehicle and the one or more recorded trajectories of the vehicle.

Example 11. The method of example 10, wherein the second training input comprises the first training input.

Example 12. The method of example 10, further comprising:
causing the student model to be deployed onboard an autonomous vehicle.

Example 13. The method of example 12, further comprising:

obtaining inference data representative of a new environment of the autonomous vehicle;
applying the student model to the inference data to predict one or more trajectories of the autonomous vehicle in the new environment; and
causing a driving path of the autonomous vehicle to be modified in view of the one or more predicted trajectories of the autonomous vehicle.

Example 14. A system comprising:

a sensing system of a vehicle, the sensing system configured to:
acquire sensing data for a driving environment of the vehicle; and
a data processing system of the vehicle, the data processing system configured to:
generate, using the acquired sensing data, an inference data characterizing one or more objects in the environment of the vehicle;
apply a first model to the inference data to predict one or more trajectories of the vehicle in the environment, wherein the first model is trained using a second model, wherein the second model comprises an autoregressive model; and
cause a driving path of the vehicle to be modified in view of the one or more predicted trajectories.

Example 15. The system of example 14, wherein the inference data comprises one or more of:

a history of motion of (i) the vehicle and (ii) the one or more objects,
a status of one or more traffic lights of the driving environment of the vehicle,
a roadgraph information associated with the driving environment of the vehicle, or
a representation of a target route of the vehicle through the driving environment of the vehicle.

Example 16. The system of example 14, wherein each of the one or more trajectories predicted by the first model comprises (i) one or more locations of the vehicle at corresponding one or more future times; and (ii) one or more velocities of the vehicle at the corresponding one or more future times.

Example 17. The system of example 14, wherein the first model is trained by:

obtaining training data, wherein the training data comprises:

a training input representative of a training environment of a reference vehicle, the training environment comprising a plurality of objects, and
one or more ground truth trajectories associated with a forecasted motion of the reference vehicle within the training environment, wherein the one or more ground truth trajectories are generated by the autoregressive model using the training input; and

applying the first model to the training input to predict one or more training trajectories of the reference vehicle; and
modifying parameters of the first model to reduce a difference between the one or more training trajectories predicted by the first model and the one or more ground truth trajectories generated by the autoregressive model.

Example 18. The system of example 14, wherein each of the one or more predicted trajectories of the vehicle comprises a plurality of temporal segments, and wherein the plurality of temporal segments of a respective predicted trajectory are predicted in parallel.

Example 19. The system of example 14, wherein the first model comprises an encoder neural network and a decoder neural network, wherein the encoder neural network comprises:
one or more self-attention blocks of artificial neurons; and
wherein the decoder neural network comprises:
one or more cross-attention blocks of artificial neurons.

Example 20. A non-transitory computer-readable memory storing instructions that, when executed by a processing device, cause the processing device to:

obtain an inference data characterizing one or more objects in an environment of a vehicle;

apply a first model to the inference data to predict one or more trajectories of the vehicle in the environment, wherein the first model is trained using a second model, wherein the second model comprises an autoregressive model; and

cause a driving path of the vehicle to be modified in view of the one or more predicted trajectories.

It is to be understood that the above description is intended to be illustrative, and not restrictive. Many other implementation examples will be apparent to those of skill in the art upon reading and understanding the above description. Although the present disclosure describes specific examples, it will be recognized that the systems and methods of the present disclosure are not limited to the examples described herein, but can be practiced with modifications within the scope of the appended claims. Accordingly, the specification and drawings are to be regarded in an illustrative sense rather than a restrictive sense. The scope of the present disclosure should, therefore, be determined with reference to the appended claims, along with the full scope of equivalents to which such claims are entitled.

**Claims**

1. A method comprising:

   obtaining first training data, wherein the training data comprises:

   a first training input representative of a driving environment of a vehicle, the driving environment comprising one or more objects, and
   one or more ground truth trajectories associated with a forecasted motion of the vehicle within the driving environment, wherein the one or more ground truth trajectories are generated by a teacher model using the first training input; and

   training, using the training data, a student model to predict one or more trajectories, wherein training the student model comprises reducing a difference between the one or more trajectories predicted by the student model and the one or more ground truth trajectories.

2. The method of claim 1, wherein the first training input representative of the driving environment of the vehicle comprises:
   a history of motion of (i) the vehicle and (ii) the one or more objects.

3. The method of claim 2, wherein the first training input representative of the driving environment of the vehicle further comprises at least one of:

   a status of one or more traffic lights of the driving environment of the vehicle,
   a roadgraph information associated with the driving environment of the vehicle, or
   a representation of a target route of the vehicle through the driving environment of the vehicle.

4. The method of any of the preceding claims, wherein the one or more trajectories predicted by the student model comprise a first set of probable trajectories of the vehicle, wherein each probable trajectory of the first set of probable trajectories of the vehicle comprises one or more locations of the vehicle at corresponding one or more future times, and optionally wherein each probable trajectory of the first set of probable trajectories of the vehicle further comprises one or more velocities of the vehicle at the corresponding one or more future times.

5. The method of any of the preceding claims, wherein the one or more trajectories predicted by the student model comprise a second set of probable trajectories of at least one object of the one or more objects of the driving environment of the vehicle.

6. The method of any of the preceding claims, wherein:

   each of the one or more predicted trajectories comprises a plurality of temporal segments, and wherein the plurality of temporal segments of a respective predicted trajectory are generated in parallel; and/or
   each of the one or more ground truth trajectories comprises a plurality of temporal segments, and wherein the plurality of temporal segments of a respective ground truth trajectory are generated iteratively, a later temporal segment of the respective ground truth trajectory being predicated on at least one earlier temporal segment of the respective ground truth trajectory.

7. The method of any of the preceding claims, wherein each of the teacher model and the student model comprise one or more of:

   a self-attention block of artificial neurons,
   a cross-attention block of artificial neurons, or
   a multilayer perceptron block of artificial neurons.

8. The method of any of the preceding claims, the teacher model is trained by:

   obtaining a second training data, wherein the second training data comprises:

   a second training input associated with one or more driving missions, and
   one or more trajectories of the vehicle recorded during the one or more driving missions; and

   training, using the second training data, the teacher model to generate one or more training trajectories of the vehicle, wherein training the teacher model comprises reducing a difference between the one or more training trajectories of the vehicle and the one or more recorded trajectories of the vehicle, and optionally wherein the second training input comprises the first training input.

9. The method of claim 8, further comprising causing the student model to be deployed onboard an autonomous vehicle, and optionally wherein the method further comprises:

   obtaining inference data representative of a new environment of the autonomous vehicle;
   applying the student model to the inference data to predict one or more trajectories of the autonomous vehicle in the new environment; and
   causing a driving path of the autonomous vehicle to be modified in view of the one or more predicted trajectories of the autonomous vehicle.

10. A system comprising:

    a sensing system of a vehicle, the sensing system configured to:
    acquire sensing data for a driving environment of the vehicle; and
    a data processing system of the vehicle, the data processing system configured to:
    generate, using the acquired sensing data, an inference data characterizing one or more objects in the environment of the vehicle;
    apply a first model to the inference data to predict one or more trajectories of the vehicle in the environment, wherein the first model is trained using a second model, wherein the second model comprises an autoregressive model; and
    cause a driving path of the vehicle to be modified in view of the one or more predicted trajectories.

11. The system of claim 10, wherein the inference data comprises one or more of:

    a history of motion of (i) the vehicle and (ii) the one or more objects,
    a status of one or more traffic lights of the driving environment of the vehicle,
    a roadgraph information associated with the driving environment of the vehicle, or
    a representation of a target route of the vehicle through the driving environment of the vehicle.

12. The system of claim 10 or claim 11, wherein:

    each of the one or more trajectories predicted by the first model comprises (i) one or more locations of the vehicle at corresponding one or more future times; and (ii) one or more velocities of the vehicle at the corresponding one or more future times; and/or
    each of the one or more predicted trajectories of the vehicle comprises a plurality of temporal segments, and wherein the plurality of temporal segments of a respective predicted trajectory are predicted in parallel.

13. The system of any of claims 10 to 12, wherein the first model is trained by:

obtaining training data, wherein the training data comprises:

a training input representative of a training environment of a reference vehicle, the training environment comprising a plurality of objects, and
one or more ground truth trajectories associated with a forecasted motion of the reference vehicle within the training environment, wherein the one or more ground truth trajectories are generated by the autoregressive model using the training input; and

applying the first model to the training input to predict one or more training trajectories of the reference vehicle; and
modifying parameters of the first model to reduce a difference between the one or more training trajectories predicted by the first model and the one or more ground truth trajectories generated by the autoregressive model.

14. The system of any of claims 10 to 13, wherein the first model comprises an encoder neural network and a decoder neural network, wherein the encoder neural network comprises:
one or more self-attention blocks of artificial neurons; and
wherein the decoder neural network comprises:
one or more cross-attention blocks of artificial neurons.

15. A non-transitory computer-readable memory storing instructions that, when executed by a processing device, cause the processing device to:

obtain an inference data characterizing one or more objects in an environment of a vehicle;
apply a first model to the inference data to predict one or more trajectories of the vehicle in the environment, wherein the first model is trained using a second model, wherein the second model comprises an autoregressive model; and
cause a driving path of the vehicle to be modified in view of the one or more predicted trajectories.

100

Driving Environment
101

Sensing System 110

| Lidar 112 | Radar 114 | Sonar 116 | Camera(s) 118 | IR Sensor(s) 119 |

Object Detection 132

Prediction Validation 136

Distillation-Trained One-Shot Model (DTOSM) 134

Perception and Planning System 130

Positional Subsystem 122

Map Info 124

Data Processing System 120

Autonomous Vehicle Control System (AVCS) 140

| Powertrain, Brakes & Steering 150 | Vehicle Electronics 160 | Signaling 170 |

FIG. 1

FIG. 2

**FIG. 3**

FIG. 4

FIG. 5

600

Obtain 1st training data that includes 1st training input representative of a driving environment and ground truth trajectories generated by teacher model  610

↓

Train student model using 1st training data  620

Obtain 2nd training data that includes 2nd training input and trajectories recorded during driving mission(s)  622

↓

Train teacher model using the second training data, the teacher model  624

↓

Cause student model to be deployed onboard a vehicle  630

↓

Obtain inference data representative of a new environment of the vehicle  640

↓

Apply student model to the inference data to predict one or more trajectories of the vehicle  650

↓

Cause a driving path of the vehicle to be modified  660

FIG. 6

700

Processing Device 702

Processing Logic
703

Main Memory 704

Instructions
722

Static Memory
706

Network Interface
Device
708

Network
720

730

Video Display
710

Alpha-Numeric
Input Device
712

Cursor Control
Device
714

Signal Generation
Device
716

Data Storage Device 718

Computer-Readable
Storage Medium 728

Instructions
722

FIG. 7

| | Europäisches Patentamt<br>European Patent Office<br>Office européen des brevets | **EUROPEAN SEARCH REPORT** | **Application Number**<br>EP 24 21 9610 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/082079 A1 (DOUILLARD BERTRAND ROBERT [US] ET AL) 16 March 2023 (2023-03-16) | 1,4,5,7, 9,10,14, 15 | INV.<br>G06N3/08<br>B60W60/00 |
| Y | * paragraphs [0047] - [0083] * | 2,3,6,8, 11-13 | |
| Y | Chen Dian ET AL: "Learning by cheating", , 27 December 2019 (2019-12-27), pages 1-12, XP093269885, Retrieved from the Internet: URL:https://arxiv.org/pdf/1912.12294 [retrieved on 2025-04-14] * abstract * * Sections 1 and 2 * * Figures 2(a), 2(b), 3(a) and 3(b) * | 2,3,6,8, 11-13 | |
| X | US 2021/133582 A1 (REFAAT KHALED [US] ET AL) 6 May 2021 (2021-05-06) * paragraphs [0051] - [0060] * | 1,7,9, 10,14,15 | |
| A | XIE XU ET AL: "Congestion-aware Multi-agent Trajectory Prediction for Collision Avoidance", 2021 IEEE INTERNATIONAL CONFERENCE ON ROBOTICS AND AUTOMATION (ICRA), IEEE, 30 May 2021 (2021-05-30), pages 13693-13700, XP033989784, DOI: 10.1109/ICRA48506.2021.9560994 [retrieved on 2021-10-05] * Page 13694, left column and foot of Fig. 1 * * Section III.D. * | 1-15 | TECHNICAL FIELDS SEARCHED (IPC)<br><br>G06N<br>B60W |
| A | WO 2023/019391 A1 (BOSCH GMBH ROBERT [DE]; UNIV TSINGHUA [CN]) 23 February 2023 (2023-02-23) * paragraphs [0043] - [0051] * | 1-15 | |

-/--

The present search report has been drawn up for all claims

| Place of search | Date of completion of the search | Examiner |
|---|---|---|
| Munich | 14 April 2025 | Nielles, Daniel |

Europäisches
Patentamt

European
Patent Office

Office européen
des brevets

**EUROPEAN SEARCH REPORT**

Application Number

EP 24 21 9610

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2023/145535 A1 (HATAMIZADEH ALI [US] ET AL) 11 May 2023 (2023-05-11) * claims 1, 2 * | 1-15 | |

TECHNICAL FIELDS
SEARCHED      (IPC)

The present search report has been drawn up for all claims

| Place of search | Date of completion of the search | Examiner |
|---|---|---|
| Munich | 14 April 2025 | Nielles, Daniel |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 21 9610

14-04-2025

| Patent document cited in search report | Publication date | Patent family member(s) | | Publication date |
|---|---|---|---|---|
| US 2023082079 A1 | 16-03-2023 | NONE | | |
| US 2021133582 A1 | 06-05-2021 | CN | 114830138 A | 29-07-2022 |
| | | EP | 4052189 A1 | 07-09-2022 |
| | | US | 2021133582 A1 | 06-05-2021 |
| | | WO | 2021087242 A1 | 06-05-2021 |
| WO 2023019391 A1 | 23-02-2023 | CN | 117836777 A | 05-04-2024 |
| | | WO | 2023019391 A1 | 23-02-2023 |
| US 2023145535 A1 | 11-05-2023 | US | 2023145535 A1 | 11-05-2023 |
| | | WO | 2022187167 A1 | 09-09-2022 |

EPO FORM P0459

For more details about this annex : see Official Journal of the European Patent Office, No. 12/82